# EUROPEAN PATENT SPECIFICATION

(11) **EP 2 693 514 B1**
(45) Date of publication and mention of the grant of the patent: **18.03.2020**
(21) Application number: 11862018.6
(22) Date of filing: 16.12.2011
(51) Int. Cl.: H01M 2/10, H01M 10/42, H01M 10/48, H01M 2/20

(54) **RACK TYPE POWER DEVICE AND BATTERY PACK WITH DETACHABLE CONNECTOR**
STROMVERSORGUNGSVORRICHTUNG VOM RACK-TYP UND BATTERIE-PACK MIT LÖSBAREM VERBINDER
DISPOSITIF ÉLECTRIQUE À BÂTI ET BLOC BATTERIE COMPORTANT UN CONNECTEUR SÉPARABLE

(30) Priority: 31.03.2011 JP 2011078169
(43) Date of publication of application: 05.02.2014
(73) Proprietor: Sanyo Electric Co., Ltd., Moriguchi-shi, Osaka 570-8677 (JP)
(72) Inventor: Uehara Yuji, Moriguchi-shi Osaka 570-8677 (JP); Yamaguchi Masao, Moriguchi-shi Osaka 570-8677 (JP); Harada Takanori, Moriguchi-shi Osaka 570-8677 (JP)
(74) Representative: Hertz, Oliver
(86) International application number: PCT/JP2011/079133
(87) International publication number: WO 2012/132134

(56) References cited:
- EP-A2- 1 462 813
- JP-A- 2002 117 821
- JP-A- 2003 309 935
- JP-A- 2004 213 965
- JP-A- 2004 213 965
- JP-A- 2006 351 311
- JP-A- 2007 042 396
- US-A1- 2007 184 339

## Description

### BACKGROUND OF THE INVENTION

### 1. Field of the Invention

The present invention relates to a rack-mount power supply device that houses in a rack a plurality of battery packs, each including a plurality of rechargeable unit cells, and to a battery pack including detachable connectors which is removably placed in a rack.

### 2. Description of the Related Art

A power supply device that charges a battery with midnight power of a utility power supply or by solar power generation, and uses the battery power as a power supply is used at home and in factories, etc., enabling to achieve a reduction in electricity costs. In addition, the power supply device can be used conveniently as a backup power supply for various types of electrical equipment. This type of power supply device includes multiple rechargeable unit cells to increase capacity. Multiple unit cells can increase output voltage by being connected in series with each other, and can increase output current by being connected in parallel with each other. Furthermore, in this type of power supply device, in order to efficiently connect multiple unit cells, a plurality of battery packs, each including a predetermined number of unit cells connected to each other in a predetermined arrangement, are connected in series or parallel with each other.

For a power supply device including a plurality of battery packs, there is developed a structure in which box-shaped battery packs are aligned and housed in a rack,
see JP 2004-213965 A or US 2007/184339 A1 or EP 1 462 813 A2.

EP 1 462 813 A2 discloses an electrical cabinet for configuring an uninterruptible power system. The cabinet has a plurality of receiving locations receiving a power module and/or a battery pack. Each receiving location includes at least one terminal connector comprising a first power connector, adapted to electrically connect with the battery pack and a signal connector adapted to electrically connect with the power module.

In a power supply device of JP 2004-213965 A, battery packs, each containing a plurality of unit cells, are housed in a rack while being aligned, and the output terminals of the battery packs are connected in series with each other on a side surface of the rack, by which desired output is extracted. In addition, there is a power supply device of another structure in which a plurality of battery packs are housed in a rack, and output terminals are connected in series with each other on the back surface side of the rack, by which desired output is extracted.

In those power supply devices, the output voltage can be increased by connecting a plurality of battery packs in series with each other. Note, however, that since the larger the number of battery packs connected in series with each other, the higher the output voltage, there is a problem that their wiring becomes dangerous. For example, in a power supply device in which a plurality of battery packs, each having an output voltage of several tens of volts, are connected in series with each other, the overall output voltage of the power supply device reaches as extremely high as several hundred volts. Thus, it is extremely dangerous if an operator receives an electric shock during an operation. In particular, in the operation of connecting the output terminals of a plurality of battery packs on the back surface side of the rack, wiring needs to be performed after housing the plurality of battery packs in the rack in the field where the power supply device is installed. Thus, it is likely that the operation is performed in a dark narrow space which is the back surface side of the rack, causing not only a reduction in the efficiency of the operation, but also a reduction in safety.

Meanwhile, in a battery pack containing multiple unit cells, in order to manage the states of the cells, the battery pack includes electronic circuits that detect and process various cell information such as the voltage and remaining capacity of the cells and cell temperatures. The battery pack including the electronic circuits uses the power of the contained unit cells to activate the electronic circuits. Hence, in the battery pack, when the electronic circuits are in an operating state at all times, even if the battery pack is not connected to a main body device, the electronic circuits consume power wastefully, decreasing the remaining capacity of the cells. Due to this, there is a drawback that when the battery pack is set and used in the main body device, the operating time becomes short.

To prevent such wasteful power consumption, there is developed a power supply device including a shutdown circuit that prevents wasteful power consumption by stopping power supply to circuits when a battery pack is not used (see JP 2007-42396 A).

In the power supply device, when the battery pack is not used, the shutdown circuit stops power supply to the circuits, preventing wasteful power consumption. In addition, when the battery pack is connected, the connection is detected, by which the shutdown circuit is turned off to start power supply to the circuits.

Note, however, that in this power supply device, by detecting a voltage at a signal terminal connected to a main body device to be placed, placement or removal in/from the main body device is detected, and thus, a signal terminal of the battery pack needs to be connected to the signal terminal of the main body device. Hence, in a power supply device in which a plurality of battery packs are housed in a rack, the signal terminals of the respective battery packs need to be individually connected to a controller, etc., on the rack side. This operation is troublesome and thus there is a drawback that the operation efficiency decreases. If the operation time increases, furthermore, the safety of the operation decreases.

The present invention is developed for the purpose of solving such drawbacks. An important object of the present invention is to provide a rack-mount power supply device and a battery pack including detachable connectors, in which while a plurality of battery packs, each containing a plurality of rechargeable unit cells, are housed in fixed positions of a rack main body in an aligned state, the plurality of battery packs can be connected to be each other efficiently and moreover safely.

Furthermore, another important object of the present invention is to provide a rack-mount power supply device and a battery pack including detachable connectors, in which by securely detecting placement or removal in/from a rack main body with an extremely simple circuit configuration, wasteful cell consumption can be reduced.

### SUMMARY OF THE INVENTION

A rack-mount power supply device of the present invention is defined in claim 1 and includes: a plurality of battery packs 1; and a rack main body 2 allowing the battery packs 1 to be removably placed in the rack main body 2. Each of the battery packs (1) of the invention is defined in claim 7 and includes: a battery 10 including a plurality of unit cells 11 connected in series and/or parallel with each other; an outer case 12 housing the battery 10; and positive and negative output terminals 13 provided so as to come out on a back surface of the outer case 12, and connected to an output side of the battery 10. The rack main body 2 includes a plurality of housing spaces 20 housing the battery packs 1 in fixed positions, respectively, and includes input terminals 23 on a facing surface 22 being an inner surface of each of the housing spaces 20 and facing positive and negative output terminals 13 provided to a corresponding battery pack 1, the output terminals 13 being to be electrically connected to the input terminals 23 in a fitting state. Furthermore, in the rack main body 2, the input terminals 23 are wired in series and/or parallel with each other on back sides of the respective facing surfaces 22. In the rack-mount power supply device, the plurality of battery packs 1 are connected in series and/or parallel with each other, with the battery packs 1 guided into the housing spaces 20 of the rack main body 2 and the output terminals 13 connected to the input terminals 23.

In the above-described rack-mount power supply device, while a plurality of battery packs, each containing a plurality of rechargeable unit cells, are housed in the fixed positions of the rack main body in an aligned state, the plurality of battery packs can be connected to each other efficiently and moreover safely. That is because the above-described power supply device includes the input terminals, to which the positive and negative output terminals of the battery packs are to be electrically connected in a fitting state, on the inner facing surfaces of the plurality of housing spaces provided to the rack main body, and the input terminals are wired in a series and/or parallel with each other on the back sides of the respective facing surfaces. In the power supply device, instead of performing wiring on the back surface side of the rack main body after housing battery packs in the rack main body as in the conventional cases, battery packs are housed in the rack main body having input terminals which are wired in advance in a predetermined connection state on the back surface side, and output terminals are connected to the input terminals, by which the plurality of battery packs are connected in series and/or parallel with each other. Therefore, the plurality of battery packs can be connected to each other efficiently and moreover safely. In particular, even at the wiring operation, battery pack changing operation, maintenance, etc., of a power supply device with extremely high output voltage, the risk of an operator receiving an electric shock during the operation, etc., can be securely avoided.

In the rack-mount power supply device of the present invention, the output terminals 13 of each of the battery packs 1 and corresponding input terminals 23 of the rack main body 2 can be detachably connected to each other through detachable connectors 3.

In the above-described power supply device, upon placement or removal of a battery pack, the output terminals and the input terminals can be extremely easily attached to or detached from each other by attaching or detaching the detachable connectors to/from each other. In addition, there is another feature that by performing attachment or detachment through the detachable connectors, the output terminals and the input terminals can be connected to each other while being positioned accurately.

In the rack-mount power supply device of the present invention, each of the battery packs 1 includes: an electronic circuit 30 detecting and monitoring states of the plurality of unit cells 11; a shutdown circuit 31 controlling the electronic circuit 30 to ON or OFF; and placement detection terminals 14 detecting that the battery pack 1 has been placed in the fixed position of the rack main body 2, and the rack main body 2 includes coupling terminals 24 to be connected to the placement detection terminals 14 with the battery pack 1 placed in the fixed position. In the power supply device, the shutdown circuit 31 places the electronic circuit 30 in an ON state when the placement detection terminals 14 and the coupling terminals 24 are in a connected state, and places the electronic circuit 30 in an OFF state when the placement detection terminals 14 and the coupling terminals 24 are in a non-connected state.

The above-described power supply device has a feature that by securely detecting placement of a battery pack in the rack main body, wasteful cell consumption when the battery pack is not placed in the rack main body can be effectively prevented. That is because in the power supply device a placement state of a battery pack is detected when the placement detection terminals and the coupling terminals are in a connected state, and the shutdown circuit controls the contained electronic circuit to OFF when the battery pack is not placed in the rack main body.

In the rack-mount power supply device of the present invention, the placement detection terminals 14 can include a pair of contact terminals 14A, and the coupling terminals 24 can form a short circuit 25 short-circuiting the pair of contact terminals 14A, and the shutdown circuit 31 can control the electronic circuit 30 to ON by detecting the short circuit of the pair of contact terminals 14A.

The above-described power supply device can securely detect a connected state between the placement detection terminals and the coupling terminals, with an extremely simple circuit configuration.

In the rack-mount power supply device of the present invention, the rack main body 2 can include a power controller 5 controlling charging and discharging of the plurality of battery packs 1 connected to each other, and the power controller can include: main switches 51 shutting off power inputted from the battery packs 1; and a control circuit 50 controlling the main switches 51 to ON or OFF, and the control circuit 50 can control the main switches 51 to ON or OFF by determining connected states of the battery packs 1.

In the above-described rack-mount power supply device, the power controller that controls the charging and discharging of a plurality of connected battery packs controls the main switches to ON or OFF by determining the connected states of the battery packs. Thus, the occurrence of arc upon placement or removal of a battery pack can be securely prevented.

In the rack-mount power supply device of the present invention, the rack main body 2 can include main placement/removal detection terminals 46 detecting a connected state of a corresponding battery pack 1, and the battery pack 1 can include main connection terminals 16 to be connected to the main placement/removal detection terminals 46. The main placement/removal detection terminals 46 and the main connection terminals 16 can be structured to be connected to each other after the output terminals 13 and the input terminals 23 are connected to each other at timing at which the battery pack 1 is placed in the rack main body 2. Furthermore, in the power supply device, the control circuit 50 can place the main switches 51 in an OFF state when any of the main placement/removal detection terminals 46 and main connection terminals 16 are in a non-connected state, and place the main switches 51 in an ON state when all of the main placement/removal detection terminals 46 and the main connection terminals 16 are in a connected state.

In the above-described rack-mount power supply device, the main switches are placed in an ON state by detecting a connected state of each battery pack through the main placement/removal detection terminals and the main connection terminals which are connected to each other after the output terminals and the input terminals are connected to each other at timing at which the battery pack is placed in the rack main body. Thus, while the occurrence of arc upon placement or removal of a battery pack is securely prevented, the battery pack can be placed or removed more safely.

In the rack-mount power supply device of the present invention, the rack main body 2 can include main placement/removal detection terminals 46 and sub-placement/removal detection terminals 47 detecting a connected state of a corresponding battery pack 1, and the battery pack 1 can include: main connection terminals 16 to be connected to the main placement/removal detection terminals 46; and sub-connection terminals 17 to be connected to the sub-placement/removal detection terminals 47. The main placement/removal detection terminals 46 and the main connection terminals 16 can be structured to be connected to each other after the output terminals 13 and the input terminals 23 are connected to each other at timing at which the battery pack 1 is placed in the rack main body 2, and furthermore, the sub-placement/removal detection terminals 47 and the sub-connection terminals 17 can be structured to be connected to each other before the output terminals 13 and the input terminals 23 are connected to each other at timing at which the battery pack 1 is placed in the rack main body 2. Furthermore, in the power supply device, the control circuit 50 can place the main switches 51 in an OFF state when the sub-placement/removal detection terminals 47 and the sub-connection terminals 17 are in a connected state and when the main placement/removal detection terminals 46 and the main connection terminals 16 are in a non-connected state, and place the main switches 51 in an ON state when the sub-placement/removal detection terminals 47 and the sub-connection terminals 17 are in a connected state and when the main placement/removal detection terminals 46 and the main connection terminals 16 are in a connected state.

In the above-described rack-mount power supply device, the main switches are controlled to ON or OFF by detecting a connected state of each battery pack through the main placement/removal detection terminals and the main connection terminals which are connected to each other after the output terminals and the input terminals are connected to each other at timing at which the battery pack is placed in the rack main body, and through the sub-placement/removal detection terminals and the sub-connection terminals which are connected to each other before the output terminals and the input terminals are connected to each other. Thus, the connected state of the battery pack can be detected more accurately. Hence, the occurrence of arc upon placement or removal of a battery pack is more securely prevented, enabling to achieve high reliability. In addition, in the power supply device, the main switches can be securely placed in an OFF state before and after the output terminals and the input terminals are connected to each other. Thus, even in a power supply device in which a plurality of battery packs are connected to each other in various connection states, the occurrence of arc upon placement or removal of a battery pack can be securely prevented.

A battery pack including detachable connectors of the present invention includes: an outer case 12 removably set in a rack main body 2; a battery 10 including a plurality of unit cells 11 connected in series and/or parallel with each other, the battery 10 being housed in the outer case 12; and detachable connectors 3 connecting outputs of the battery 10 to the rack main body 2. The detachable connectors 3 include: a first connector 3A fixed to the outer case 12; and a second connector 3B fixed to the rack main body 2, the first connector 3A being detachably coupled to the second connector 3B. The first connector 3A includes output terminals 13 fixed to a back surface of the outer case 12 and connected to the battery 10. The second connector 3B includes input terminals 23 allowing the battery 10 to be connected in series or parallel with the input terminals 23 on a side of the rack main body 2, the output terminals 13 being connected to the input terminals 23. In the battery pack, the first connector 3A is coupled to the second connector 3B with the outer case 12 set in the rack main body 2, by which the battery 10 is connected to the input terminals 23.

The above-described battery pack including detachable connectors has a feature that the battery pack can be placed in a fixed position of the rack main body efficiently and moreover safely. That is because the above-described battery pack is removably set in the rack main body through the detachable connectors including the first connector fixed to the outer case and the second connector fixed to the rack main body. Furthermore, in the detachable connectors, the first connector includes the output terminals, and the second connector includes the input terminals to which the output terminals are to be connected and which allows the battery to be connected in series or parallel with the input terminals on the rack main body side. Thus, upon placement or removal of a battery pack, the output terminals and the input terminals can be extremely easily connected to each other while being positioned accurately. Furthermore, the input terminals of the second connector are structured to allow the battery to be connected in series or parallel with the input terminals on the rack main body side. Thus, by setting a battery pack in a rack main body in which input terminals are wired in advance, output terminals can be safely connected to the input terminals.

The battery pack including detachable connectors of the present invention include: an electronic circuit 30 detecting and monitoring states of the plurality of unit cells 11; and a shutdown circuit 31 controlling the electronic circuit 30 to ON or OFF, and furthermore, the first connector 3A includes placement detection terminals 14 detecting that the outer case 12 has been placed in a fixed position of the rack main body 2, and the second connector 3B includes coupling terminals 24 to be connected to the placement detection terminals 14. In the battery pack, the shutdown circuit 31 places the electronic circuit 30 in an ON state when the placement detection terminals 14 and the coupling terminals 24 are in a connected state, and places the electronic circuit 30 in an OFF state when the placement detection terminals 14 and the coupling terminals 24 are in a non-connected state.

The above-described battery pack has a feature that by securely detecting placement of the battery pack in the rack main body, wasteful cell consumption when the battery pack is not placed in the rack main body can be effectively prevented. That is because in the battery pack a placement state of the battery pack is detected when the placement detection terminals and the coupling terminals are in a connected state, and the shutdown circuit controls the contained electronic circuit to OFF when the battery pack is not placed in the rack main body.

In the battery pack including detachable connectors of the present invention, the placement detection terminals 14 can include a pair of contact terminals 14A, and the coupling terminals 24 can form a short circuit 25 short-circuiting the pair of contact terminals 14A, and the shutdown circuit 31 can control the electronic circuit 30 to ON by detecting the short circuit of the pair of contact terminals 14A.

The above-described battery pack can securely detect a connected state between the placement detection terminals and the coupling terminals, with an extremely simple circuit configuration.

In the battery pack including detachable connectors of the present invention, the second connector 3B can include main placement/removal detection terminals 46 detecting a connected state of the first connector 3A, and the first connector 3A can include main connection terminals 16 to be connected to the main placement/removal detection terminals 46. The main placement/removal detection terminals 46 and the main connection terminals 16 can be structured to be connected to each other after the output terminals 13 and the input terminals 23 are connected to each other at timing at which the outer case 12 is placed in the rack main body 2. In the battery pack, a placement state between the outer case 12 and the rack main body 2 can be detected by detecting a connected state between the main placement/removal detection terminals 46 and the main connection terminals 16.

In the above-described battery pack, the detachable connectors are provided with the main placement/removal detection terminals and the main connection terminals which are connected to each other after the output terminals and the input terminals are connected to each other at timing at which the battery pack is placed in the rack main body. Thus, a placement state between the outer case and the rack main body can be detected by detecting a connected state between the main placement/removal detection terminals and the main connection terminals.

In the battery pack including detachable connectors of the present invention, the second connector 3B can include main placement/removal detection terminals 46 and sub-placement/removal detection terminals 47 detecting a connected state of the first connector 3A, and the first connector 3A can include: main connection terminals 16 to be connected to the main placement/removal detection terminals 46; and sub-connection terminals 17 to be connected to the sub-placement/removal detection terminals 47. The main placement/removal detection terminals 46 and the main connection terminals 16 can be structured to be connected to each other after the output terminals 13 and the input terminals 23 are connected to each other at timing at which the outer case 12 is placed in the rack main body 2, and the sub-placement/removal detection terminals 47 and the sub-connection terminals 17 can be structured to be connected to each other before the output terminals 13 and the input terminals 23 are connected to each other at timing at which the outer case 12 is placed in the rack main body 2. In the battery pack, a placement state between the outer case 12 and the rack main body 2 can be detected by detecting a connected state between the main placement/removal detection terminals 46 and the main connection terminals 16 and a connected state between the sub-placement/removal detection terminals 47 and the sub-connection terminals 17.

In the above-described battery pack, the detachable connectors are provided with the main placement/removal detection terminals and the main connection terminals which are connected to each other after the output terminals and the input terminals are connected to each other at timing at which the battery pack is placed in the rack main body, and the sub-placement/removal detection terminals and the sub-connection terminals which are connected to each other before the output terminals and the input terminals are connected to each other. Thus, a placement state between the outer case and the rack main body is detected more accurately by detecting a connected state between the sub-placement/removal detection terminals and the sub-connection terminals in addition to a connected state between the main placement/removal detection terminals and the main connection terminals, enabling to improve safety upon placement or removal of the battery pack in/from the rack main body.

### BRIEF DESCRIPTION OF THE DRAWINGS

Fig. 1 is a perspective view of a rack-mount power supply device according to one embodiment of the present invention.
Fig. 2 is a perspective view of the back of the rack-mount power supply device shown in Fig. 1.
Fig. 3 is a vertical cross-sectional view of the rack-mount power supply device shown in Fig. 1.
Fig. 4 is a block circuit diagram of the rack-mount power supply device shown in Fig. 1.
Fig. 5 is a block circuit diagram of a battery pack according to one embodiment of the present invention.
Fig. 6 is a schematic exploded cross-sectional view showing an example of detachable connectors.
Fig. 7 is a schematic cross-sectional view showing a coupling structure of the detachable connectors shown in Fig. 6.
Fig. 8 is a block circuit diagram of a rack-mount power supply device according to another embodiment of the present invention.
Fig. 9 is a block circuit diagram of a rack-mount power supply device according to another embodiment of the present invention.
Fig. 10 is a schematic exploded cross-sectional view showing detachable connectors of the rack-mount power supply device shown in Fig. 9.
Fig. 11 is a schematic exploded cross-sectional view showing detachable connectors of a rack-mount power supply device according to another embodiment of the present invention.
Fig. 12 is a schematic cross-sectional view showing a coupling structure of the detachable connectors shown in Fig. 11.

### DETAILED DESCRIPTION OF THE EMBODIMENT(S)

Embodiments of the present invention will be described below based on the drawings. Note, however, that the embodiments shown below exemplify rack-mount power supply devices and battery packs including detachable connectors for embodying the technical idea of the present invention, and the present invention does not specify rack-mount power supply devices and battery packs including detachable connectors to those shown below. In the present specification, the members shown in the claims are not specified to the members in the embodiments.

A rack-mount power supply device of the present invention can be used as placement-type electricity storage equipment. For example, the rack-mount power supply device can be used as a power supply for home use or for factories in a power supply system that performs charging with sunlight, midnight power, etc., and performs discharging when necessary, or can also be used as a power supply for street lights that performs charging with daytime sunlight and performs discharging at night, or as a backup power supply for traffic lights or for servers that is driven during a power failure.

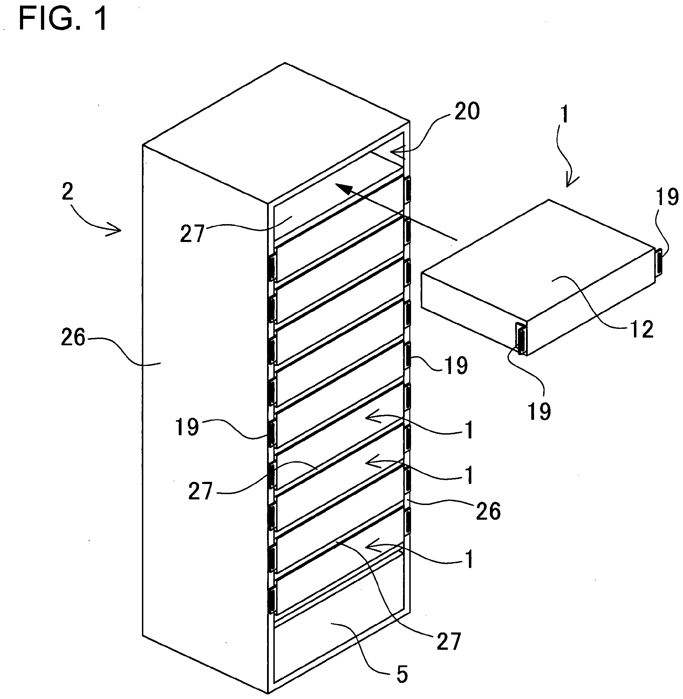

In a rack-mount power supply device shown in Figs. 1 to 4, a plurality of battery packs 1 are removably set in a rack main body 2. The plurality of battery packs 1 are disposed so as to be housed in housing spaces 20 which are provided in the rack main body 2 at predetermined intervals, and to be aligned in fixed positions of the rack main body 2.

Each battery pack 1 includes a battery 10 including a plurality of unit cells 11 connected in series and/or parallel with each other; an outer case 12 housing the battery 10; and positive and negative output terminals 13 provided so as to come out on a back surface of the outer case 12, and connected to the output side of the battery 10.

In the battery 10, the plurality of unit cells 11 are connected in series and parallel with each other to obtain an output voltage of several tens of volts. The unit cells 11 are lithium-ion secondary cells. The battery 10 having lithium-ion secondary cells as the unit cells 11 can increase output with respect to capacity and weight. Note, however, that for a unit cell, instead of a lithium-ion cell, a lithium-polymer cell or a nickel-hydrogen cell can also be used. Therefore, the present invention does not specify a unit cell to a lithium-ion cell, and for a unit cell, all rechargeable cells can be used. Furthermore, the battery 10 shown in the drawing is provided with a temperature sensor 39 for temperature detection. A temperature sensor may be provided to each unit cell or may monitor only a unit cell present in a specific position.

The overall shape of the outer case 12 is a thick box shape, and houses the battery 10 including the plurality of unit cells 11. The outer case 12 is made of a material with excellent insulation properties, e.g., a resin. The outer case 12 is formed in a shape and a size that allow the outer case 12 to be housed in a housing space 20 of the rack main body 2. Furthermore, the battery pack 1 shown in the drawings is provided with positioning flange portions 19 protruding from both sides of the outer case 12 so that the battery pack 1 can be inserted into a predetermined depth of the housing space 20 of the rack main body 2. The battery pack 1 is disposed in a fixed position such that the positioning flange portions 19 abut against opening edges of the rack main body 2 with the battery pack 1 housed in the housing space 20 of the rack main body 2. In the battery pack 1, the positioning flange portions 19 can be fixed to the opening edges of the rack main body 2 via coupling members such as set screws.

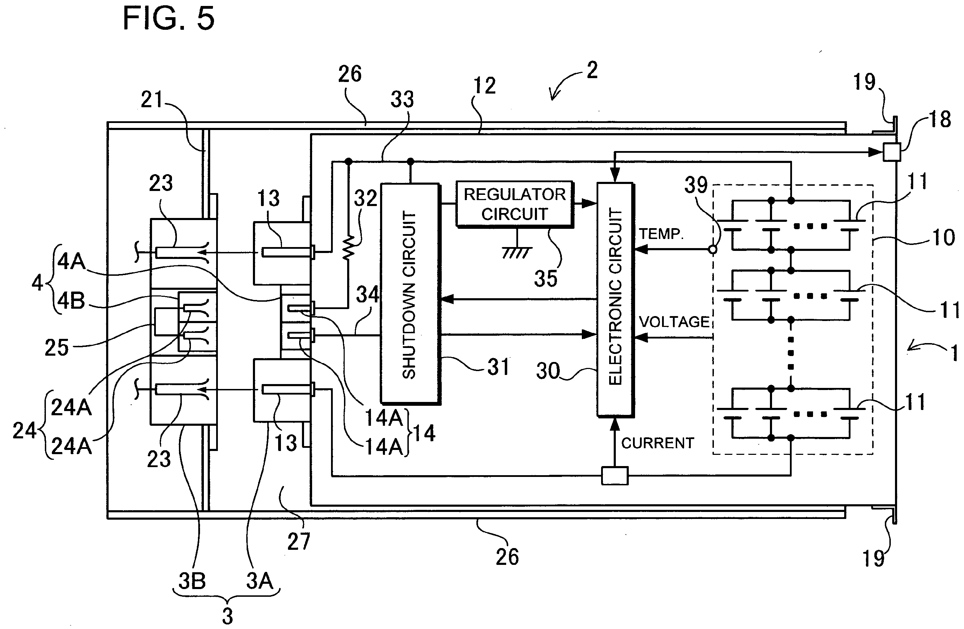

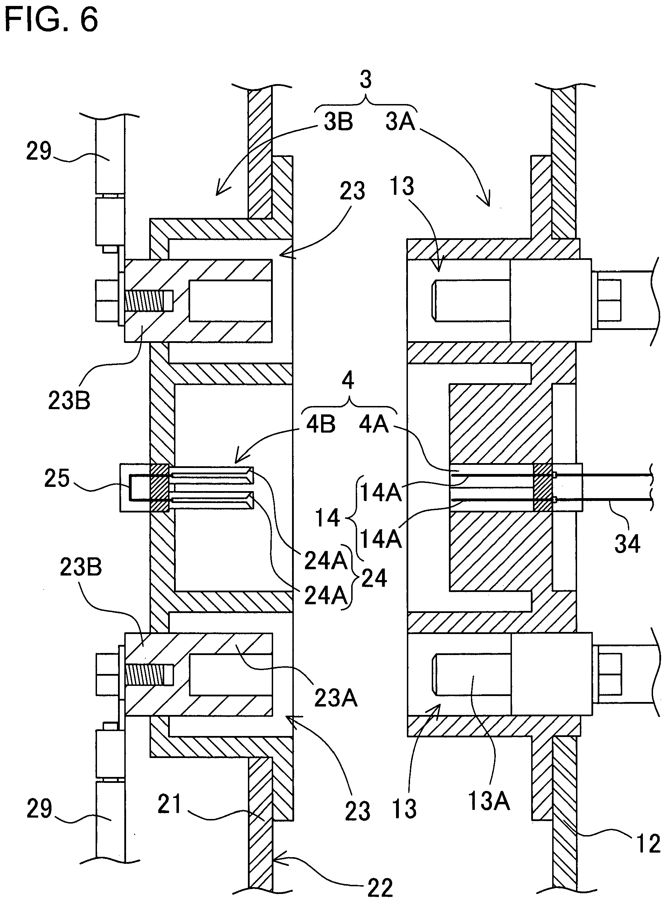

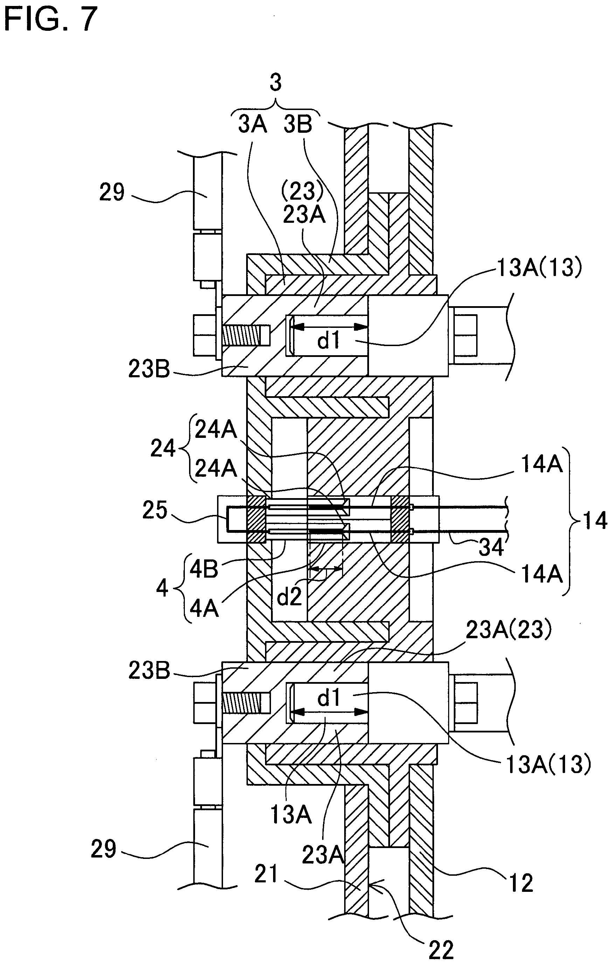

The positive and negative output terminals 13 are disposed so as to come out on the back surface of the outer case 12. The positive and negative output terminals 13 are connected to the positive and negative outputs of the battery 10 within the outer case 12. As shown in Fig. 5, the output terminals 13 are connected to input terminals 23 provided at the back of a housing space 20 with the battery pack 1 inserted into the housing space 20 of the rack main body 2. The output terminals 13 and the input terminals 23 are structured to be able to be electrically connected to each other by a fitting structure. An example of a coupling structure between the output terminals 13 and the input terminals 23 is shown in schematic cross-sectional views of Figs. 6 and 7. Each output terminal 13 has a cylindrical insertion portion 13A, and each input terminal 23 includes a cylindrical connecting ring portion 23A into which the insertion portion 13A fits. The insertion portion 13A of the output terminal 13 is inserted into the connecting ring portion 23A of the input terminal 23, and an outer surface of the insertion portion 13A comes into contact with an inner surface of the connecting ring portion 23A, by which the insertion portion 13A and the connecting ring portion 23A are electrically connected to each other. Note, however, that the shapes of an output terminal and an input terminal are not necessarily specified to those described above, and the output terminal and the input terminal can employ other structures that allow the output terminal and the input terminal to be detachably coupled to each other for connection in a low resistance state.

Furthermore, the battery pack 1 includes an electronic circuit 30 including a microcomputer, which detects and monitors the states of the plurality of unit cells 11. The electronic circuit 30 includes: various types of circuits that detect cell information such as the temperatures, voltage, and charging and discharging current of the plurality of unit cells 11; a circuit that detects and computes the full charges and remaining capacity of the cells from those pieces of cell information; a protection circuit that monitors whether the cells are normal; or the like.

The rack main body 2 includes the plurality of housing spaces 20 housing the plurality of battery packs 1. In the rack main body 2 shown in the drawings, the plurality of housing spaces 20 are provided vertically, and each housing space houses a battery pack 1. The rack main body 2 in Figs. 1 to 3 is structured such that 10 housing spaces 20 extending in a horizontal direction are provided vertically, and the battery packs 1 can be aligned in the respective housing spaces 20 with the battery packs 1 housed in a horizontal position. Note, however, that a rack main body can also be such that a plurality of housing spaces extending vertically are provided in the horizontal direction, and battery packs are housed in the respective housing spaces so as to be arranged in a vertical position. Furthermore, a rack main body can also be such that a plurality of rows of housing spaces, each row having housing spaces provided in the horizontal direction, are provided in the vertical direction.

In the rack main body 2 in Fig. 1, the inside of the rack main body 2 is partitioned into the plurality of housing spaces 20 by providing a column of a plurality of support plates 27 at predetermined intervals between sidewalls 26 which are provided on both sides of the rack main body 2. In the rack main body 2, the internal form of each housing space 20 has a shape and a size that follow the external form of a battery pack 1 so that the battery pack 1 can be accurately disposed in the fixed position of the housing space 20. In the rack main body 2, a battery pack 1 is inserted along the inner surfaces of the sidewalls 26 located on both side of the rack main body 2 and a top surface of a support plate 27, by which the battery pack 1 can be inserted while being positioned. Note, however, that a rack main body can also be such that a housing space is provided with guide ribs or guide rails to allow a battery pack to be inserted while being guided.

The rack main body 2 shown in the drawings is provided with the plurality of shelf-like housing spaces 20 by combining the plate-like sidewalls 26 with the support plates 27. However, in a rack main body, sidewalls and support plates do not necessarily need to be plate-like. Though not shown, a rack main body can also be such that the rack main body has a framework structure in which a plurality of columns and beams are combined, and battery packs are supported by the beams provided in a front-back direction and a horizontal direction. Furthermore, in the rack main body, sidewalls and support plates can be formed in a lattice or formed of a mesh material or can also be omitted. The rack main body of this structure provides improved ventilation characteristics, enabling to efficiently cool down battery packs.

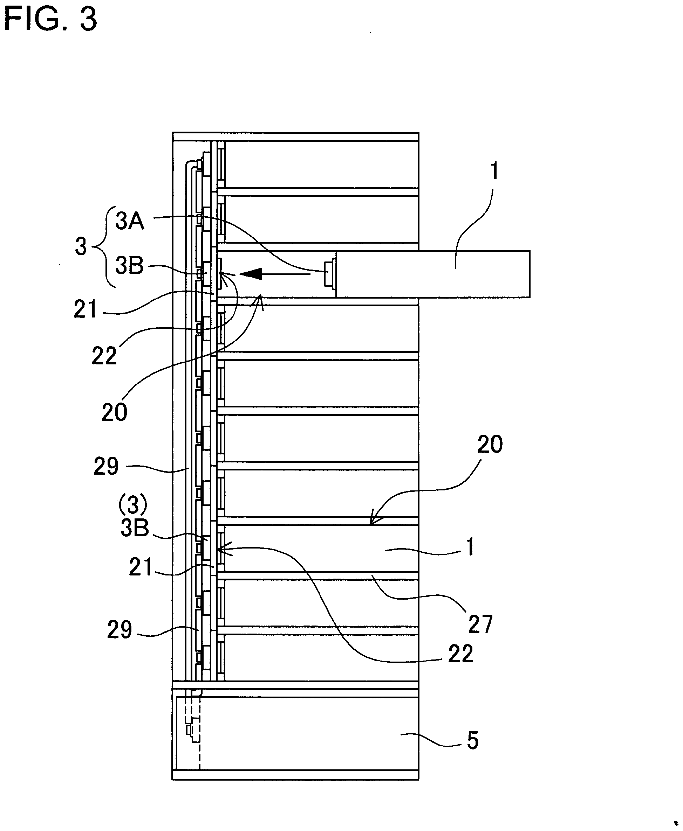

Furthermore, the rack main body 2 has the input terminals 23 disposed on a facing surface 22 which is an inner surface of a housing space 20 and faces a back surface of a battery pack 1 housed in the housing space 20. In the rack main body 2, as shown in Figs. 3 and 5, a connecting plate 21 is disposed at the back of the housing space 20, and the input terminals 23 are disposed using the inner surface of the connecting plate 21 as the facing surface 22. Though not shown, the connecting plate 21 disposed at the back of the housing space 20 can be removably fixed to the back surface side of the rack main body 2 via coupling members, etc. The connecting plate 21 can be easily removed from the rack main body 2 for maintenance.

In the above-described power supply device, a battery pack 1 is guided into a housing space 20 of the rack main body 2 and placed removably. In the power supply device, in order to removably set a battery pack 1 in the rack main body 2, output terminals 13 and input terminals 23 are connected to each other through detachable-type detachable connectors 3. The detachable connectors 3 shown in Figs. 6 and 7 include a first connector 3A fixed to a back surface of the battery pack 1; and a second connector 3B fixed to a connecting plate 21 provided to the rack main body 2. The first connector 3A and the second connector 3B can be inserted and detached from each other, and are disposed in positions facing each other. The first connector 3A contains, at its both edges, the positive and negative output terminals 13. The second connector 3B contains, at its both edges, the input terminals 23 to which the output terminals 13 are connected. The first connector 3A and the second connector 3B have shapes that fit together. The first connector 3A is coupled to the second connector 3B in a fit-together state, by which the output terminals 13 and the input terminals 23 are electrically connected to each other. In the power supply device, upon placement or removal of a battery pack 1, output terminals 13 and input terminals 23 can be extremely easily attached to or detached from each other by attaching or detaching detachable connectors 3 to/from each other. By this, the connection and changing operations of a battery pack 1 can be performed speedily and safely. Furthermore, allowing the detachable connectors 3 to have a fit-together structure provides another feature that the output terminals 13 and the input terminals 23 can be connected to each other while being positioned accurately.

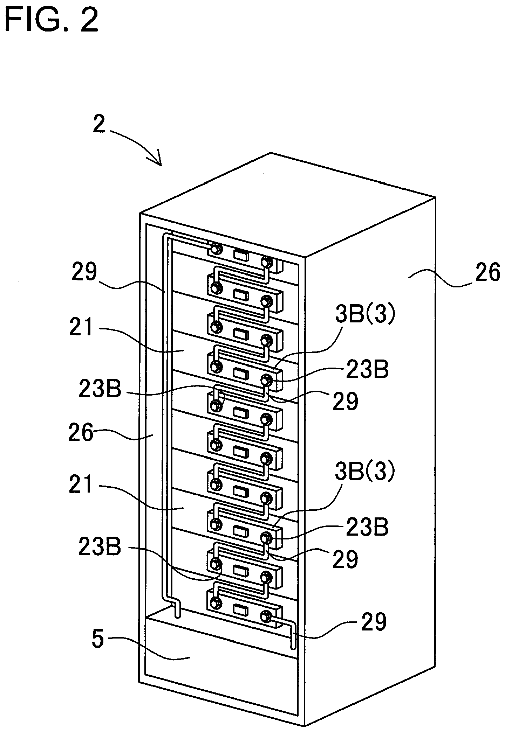

Furthermore, in the input terminals 23 disposed on the connecting plate 21, connecting portions 23B at the rear ends of the input terminals 23 are allowed to come out on the back side of the connecting plate 21. The input terminals 23 shown in Figs. 6 and 7 are contained in the second connector 3B of the detachable connectors 3. Therefore, the second connector 3B is fixed with penetrating through the connecting plate 21, and the connecting ring portions 23A of the input terminals 23 are allowed to come out on the side of the facing surface 22 of the connecting plate 21, and the connecting portions 23B at the rear ends of the input terminals 23 are allowed to come out on the back side of the connecting plate 21. As shown in Fig. 2, the connecting portions 23B at the rear ends of the input terminals 23, which come out on the back sides of the respective connecting plates 21, are connected in series or parallel with each other through connecting leads 29. The connecting leads 29 shown in the drawing are cables made of metal wires. Note, however, that a connecting lead can also be a metal plate.

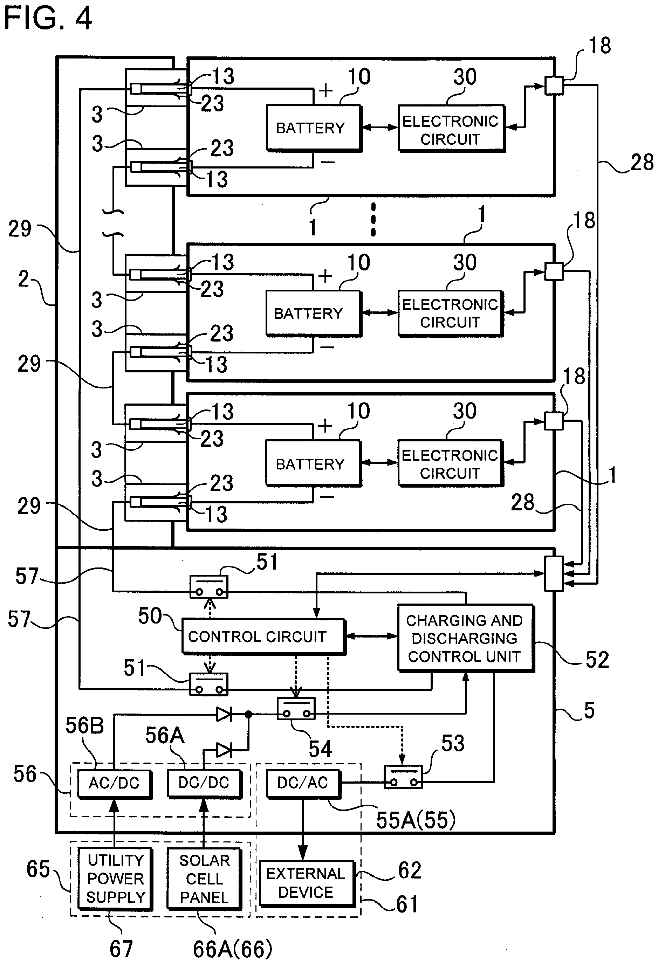

In the power supply device shown in Figs. 2 and 4, the connecting leads 29 are wired such that the outputs of all battery packs 1 placed in the rack main body 2 are connected in series with each other. Specifically, output terminals 13 of different polarities of battery packs 1 which are placed adjacent to each other vertically are connected to input terminals 23. The input terminals 23 are connected to each other by the connecting lead 29 like beads on a string. Furthermore, the ends of the connecting leads 29 connected to battery packs 1 which are disposed at top and bottom ends are inputted to a power controller 5 disposed in the lower part of the rack main body 2. In the power supply device shown in the drawings, the outputs of 10 battery packs 1 are connected in series with each other. In the power supply device, the output voltage of each battery pack 1 is set to about 50 V to obtain an overall output voltage of the power supply device of about 500 V. Note, however, that the power supply device can also be such that the output voltage of each battery pack is set to 30 V to 60 V, and 4 to 14 of such battery packs are connected in series with each other to obtain an overall output voltage of the power supply device of 200 V to 800 V. As described above, the power supply device in which all of the plurality of battery packs 1 are connected in series with each other can obtain an extremely high output voltage.

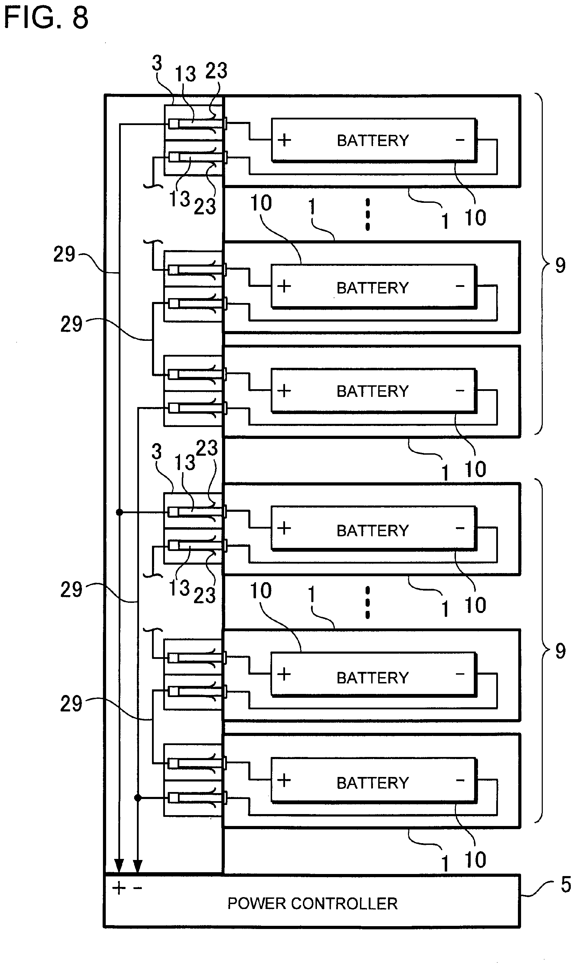

Note, however, that the wiring of connecting leads is not necessarily specified to wiring that connects all battery packs in series. The connecting leads are wired such that a plurality of battery packs to be placed can be outputted in a predetermined connection state. For example, in a power supply device, a plurality of battery packs can also be connected in series and parallel with each other. This power supply device can increase discharge current while increasing output voltage. In a power supply device shown in Fig. 8, a plurality of battery packs 1 are connected in series with each other to form a series unit 9, and the series units 9 are connected in parallel with each other and inputted to a power controller 5. In this power supply device, input terminals 23 connected to specific battery packs 1 are connected in series with each other by the connecting leads 29 to form a series unit 9, and furthermore, the connecting leads 29 connected to both ends of the series unit 9 are connected in parallel with each other and inputted to the power controller 5. Furthermore, a power supply device can also be such that, though not shown, a plurality of battery packs are connected in parallel with each other to form a parallel unit, and the parallel units are connected in series with each other and inputted to a power controller. In these power supply devices, the number of battery packs connected in series and parallel with each other is determined according to the required output voltage and charging and discharging current.

In the above-described power supply devices, as a process before placing the battery packs 1, on the back surface side of the rack main body 2, the connecting portions 23B at the rear ends of the input terminals 23 are wired in series and/or parallel with each other by the connecting leads 29. This wiring operation can be performed during the process of manufacturing the rack main body 2 or can be performed in the field where the power supply device is installed. Hence, wiring of the input terminals 23 can be performed efficiently and moreover safely. The rack main body 2 in which the plurality of input terminals 23 are wired in series and/or parallel with each other by the connecting leads 29 is installed in the field, and the battery packs 1 are placed in the respective housing spaces 20 of the rack main body 2. With a battery pack 1 placed in the rack main body 2, the output terminals 13 of the battery pack 1 are connected to the input terminals 23 within the rack main body 2.

Furthermore, the battery pack 1 shown in Fig. 5 includes a shutdown circuit 31 that turns on and off the electronic circuit 30 contained in the battery pack 1, in order to prevent power from being consumed when the battery pack 1 is not placed in the rack main body 2. The electronic circuit 30 contained in the battery pack 1 monitors the cells while detecting cell information in a predetermined cycle. Thus, even when the battery pack 1 is not placed in the rack main body 2, if the electronic circuit 30 is in an ON state, then the power of the battery 10 is consumed wastefully. In this battery pack 1, when the battery pack 1 is not placed in the rack main body 2, the shutdown circuit 31 places the electronic circuit 30 in an OFF state, and when it is detected that the battery pack 1 has been placed in a fixed position of the rack main body 2, the shutdown circuit 31 places the electronic circuit 30 in an ON state, by which the battery 10 is prevented from being consumed.

Furthermore, the battery pack 1 includes placement detection terminals 14 to detect placement of the battery pack 1 in a fixed position of the rack main body 2. In addition, the rack main body 2 includes coupling terminals 24 to be connected to the placement detection terminals 14 with the battery pack 1 placed in the fixed position. The placement detection terminals 14 and the coupling terminals 24 are detachably connected to each other through detachable-type sub-connectors 4. The sub-connectors 4 shown in the drawing include a battery-side connector 4A disposed in the first connector 3A of the detachable connectors 3; and a main body-side connector 4B disposed in the second connector 3B of the detachable connectors 3. The battery-side connector 4A and the main body-side connector 4B shown in Figs. 6 and 7 can be inserted and detached from each other, and are located at the central portions of the detachable connectors 3, and are disposed in positions facing each other. The battery-side connector 4A contains the placement detection terminals 14 including a pair of contact terminals 14A. The main body-side connector 4B contains the coupling terminals 24 including a pair of connector terminals 24A. The battery-side connector 4A and the main body-side connector 4B have shapes that fit together. The battery-side connector 4A and the main body-side connector 4B are coupled to each other in a fit-together state, by which the pair of contact terminals 14A are connected to the pair of connector terminals 24A. In the sub-connectors 4, when the first connector 3A and the second connector 3B of the detachable connectors 3 are coupled to each other upon placement of the battery pack 1, the battery-side connector 4A and the main body-side connector 4B are coupled to each other. When the first connector 3A and the second connector 3B are detached from each other upon removal of the battery pack 1, the battery-side connector 4A and the main body-side connector 4B are detached from each other.

Furthermore, the placement detection terminals 14 and the coupling terminals 24 shown in Figs. 6 and 7 are disposed so as not to come into contact with each other until the output terminals 13 and the input terminals 23 come into contact with each other at a predetermined length. In the detachable connectors 3 and the sub-connectors 4, as shown in Fig. 7, the length (d1) of a contact portion between the output terminal 13 and the input terminal 23 with the battery pack 1 placed in the fixed position is made longer than the length (d2) of a contact portion between the placement detection terminals 14 and the coupling terminals 24 so that the placement detection terminals 14 and the coupling terminals 24 can come into contact with each other after the output terminals 13 and the input terminals 23 come into contact with each other at the predetermined length. When the output terminals 13 and the input terminals 23 go to a state of coming into contact with each other at the predetermined length at timing at which the battery pack 1 is placed in the rack main body 2, the placement detection terminals 14 and the coupling terminals 24 go to a contact state, by which it is detected that the output terminals 13 and the input terminals 23 are in a connected state. Therefore, the battery pack 1 detects whether the battery pack 1 has been placed in the fixed position of the rack main body 2, by detecting a contact state between the placement detection terminals 14 and the coupling terminals 24.

In addition, when the battery pack 1 is removed from the rack main body 2, the placement detection terminals 14 and the coupling terminals 24 go to a non-connected state. Therefore, the battery pack 1 detects that the battery pack 1 is in a state of having been removed from the rack main body 2, by detecting a non-connected state between the placement detection terminals 14 and the coupling terminals 24. Furthermore, a battery pack can also determine that the battery pack is in a state of having been removed from a rack main body, when placement detection terminals and coupling terminals are in a non-connected state and when an electronic circuit detects that charging and discharging current is not flowing through a battery.

The shutdown circuit 31 detects a placement/removal state between the battery pack 1 and the rack main body 2 by detecting a connected state between the placement detection terminals 14 and the coupling terminals 24. The placement detection terminals 14 shown in the drawings include the pair of contact terminals 14A. One of the contact terminals 14A is connected to a positive-side output line 33 of the battery 10 through a pull-up resistor 32. The other contact terminal 14A is inputted to the shutdown circuit 31 through a detection line 34. The coupling terminals 24 form a short circuit 25 that couples the pair of connector terminals 24A to each other. Specifically, the coupling terminals 24 form the short circuit 25 by connecting the rear ends of the pair of connector terminals 24A to each other. In the battery pack 1, when the coupling terminals 24 are connected to the placement detection terminals 14, the pair of contact terminals 14A are short-circuited by the short circuit 25, by which a voltage inputted to the shutdown circuit 31 through the detection line 34 changes. This occurs because when the placement detection terminals 14 and the coupling terminals 24 are connected to each other, the detection line 34 of the shutdown circuit 31 is connected to the output line 33 through the pull-up resistor 32. Hence, when the battery pack 1 is placed in the fixed position of the rack main body 2, a voltage inputted to the shutdown circuit 31 increases to "High". When the battery pack 1 is removed from the rack main body 2, the placement detection terminals 14 and the coupling terminals 24 go to a non-connected state and thus a voltage is not applied to the detection line 34 of the shutdown circuit 31, resulting in the voltage becoming "Low". This occurs because the detection line 34 is not connected to the output line 33 by the pull-up resistor 32.

When the shutdown circuit 31 detects that the battery pack 1 has been connected to the rack main body 2, by an increase in voltage inputted to the detection line 34, the shutdown circuit 31 controls the electronic circuit 30 to an ON state. The battery pack 1 shown in the drawings includes a regulator circuit 35 that stabilizes the voltage of the battery 10 and supplies the voltage to the electronic circuit 30. The shutdown circuit 31 is connected between the regulator circuit 35 and the output line 33 of the battery 10. Therefore, when the shutdown circuit 31 detects that the battery pack 1 has been connected to the rack main body 2, the shutdown circuit 31 connects the output line 33 of the battery 10 to the regulator circuit 35 to bring the regulator circuit 35 to an operating state. Then, the regulator circuit 35 brought to the operating state supplies power to the electronic circuit 30 to activate the electronic circuit 30. The regulator circuit 35 stabilizes the voltage of the battery 10 and supplies power that drives the electronic circuit 30. Therefore, in the battery pack 1 including the regulator circuit 35, even if the voltage of the battery 10 changes, a power supply voltage with little voltage change is supplied to the electronic circuit 30, enabling the electronic circuit 30 to operate stably. Note, however, that a battery pack does not necessarily require a regulator circuit, and the power of a battery can also be supplied without through a regulator circuit.

Furthermore, when the shutdown circuit 31 detects that the battery pack 1 has been removed from the rack main body 2, the shutdown circuit 31 outputs an OFF signal to the electronic circuit 30. The electronic circuit 30 to which the OFF signal has been inputted performs a termination process such as saving of data, and then shuts down and goes to an OFF state. When the electronic circuit 30 goes to the OFF state by performing the termination process, the shutdown circuit 31 shuts off the power supply from the battery 10 to the regulator circuit 35 to stop the operation of the regulator circuit 35. In this state, power is not supplied to the electronic circuit 30 from the regulator circuit 35, and the electronic circuit 30 is held in the OFF state.

The above-described shutdown circuit 31 controls the ON/OFF state of the electronic circuit 30 by controlling the regulator circuit 35 which supplies power to the electronic circuit 30, to ON or OFF. Note, however, that a shutdown circuit does not necessarily need to control an electronic circuit to ON or OFF by controlling power supply to the electronic circuit. The shutdown circuit can also be such that when the shutdown circuit detects that a battery pack has been placed in a rack main body, the shutdown circuit outputs an ON signal to the electronic circuit to activate the electronic circuit, and when the shutdown circuit detects that the battery pack has been removed from the rack main body, the shutdown circuit outputs an OFF signal to the electronic circuit to shut down the electronic circuit.

In the above-described manner, the shutdown circuit 31 controls the electronic circuit 30 to an ON state or an OFF state by detecting a placement state of the battery pack 1 from a connected state between the placement detection terminals 14 and the coupling terminals 24.

Furthermore, the power supply devices in Figs. 1 to 4 and Figs. 8 and 9 include the power controller 5 that controls the charging and discharging of the plurality of battery packs 1 connected to each other. To the power controller 5 are connected the terminal connecting leads 29 of the plurality of battery packs 1 which are connected in series and/or parallel with each other. The power controller 5 controls the discharging of the battery packs 1 and the charging of the unit cells 11 contained in the battery packs 1. In the power supply device shown in Figs. 1 to 3, the power controller 5 is set in the lower part of the rack main body 2. Note, however, that a power controller can also be provided in the upper part of a rack main body or can also be provided in the middle of the rack main body.

Furthermore, the power controller 5 includes main switches 51 that shut off power inputted from the battery packs 1; and a control circuit 50 that controls the main switches 51 to ON or OFF. In the power supply device including the plurality of battery packs 1 connected to each other, when a battery pack 1 is placed or removed with the outputs of the battery pack 1 connected to the load side, arc may possibly occur between output terminals 13 and input terminals 23. In particular, in the power supply device including the plurality of battery packs 1 connected in series with each other, since the voltage on the input side of the power controller 5 gets as high as several hundred volts, it is dangerous to remove a battery pack 1 with power supplied from the battery packs 1 to the load, or to place a battery pack 1 with input lines 57 of the power controller 5 connected to the load side. Hence, in the power controller 5, the main switches 51 are provided to the input lines 57 on the input side, and the ON/OFF of the main switches 51 is controlled by the control circuit 50. Here, for the main switches 51, high-voltage switches are used.

The control circuit 50 turns on the main switches 51 when all of the battery packs 1 are connected to the fixed positions of the rack main body 2, to bring the battery packs 1 to a state of being able to charge and discharge. In addition, the control circuit 50 switches the main switches 51 to OFF at timing at which any battery pack 1 is placed or removed, to prevent the occurrence of arc upon attachment or detachment of output terminals 13 of the placed or removed battery pack 1 to/from input terminals 23.

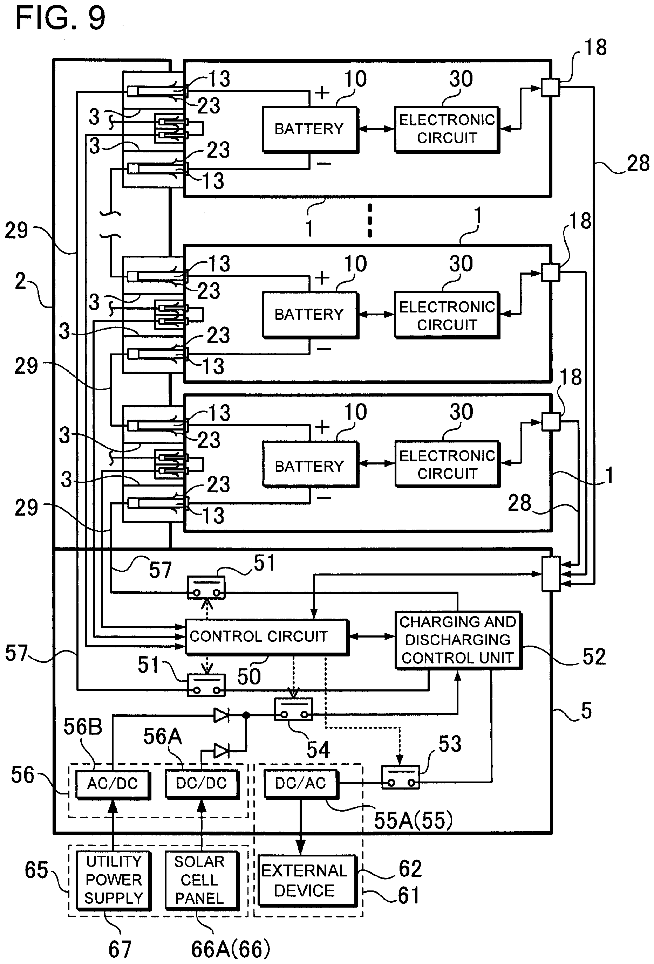

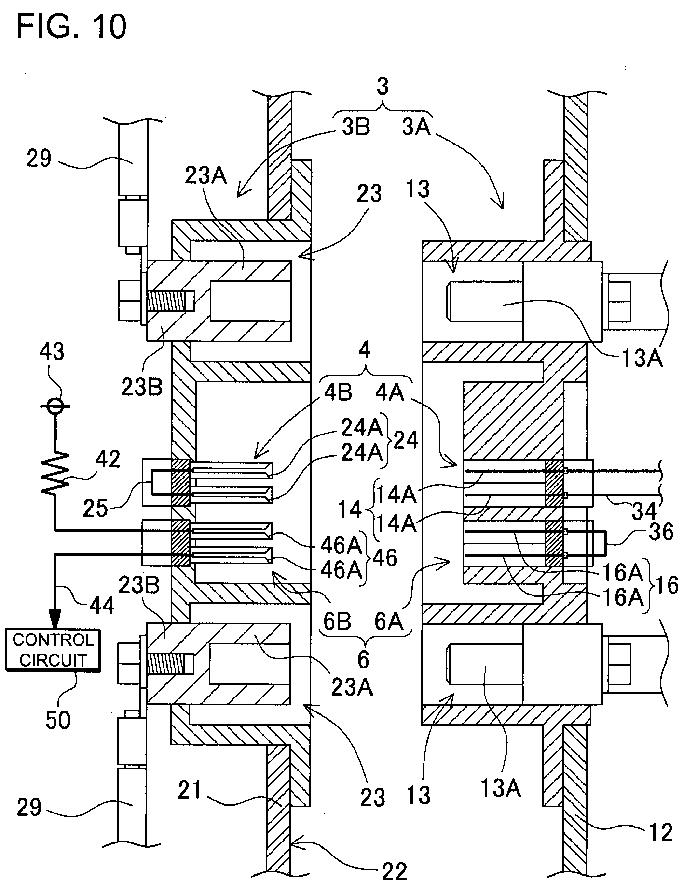

Furthermore, the control circuit 50 can control the main switches 51 to ON or OFF by determining a placement/removal state of a battery pack 1. In the power supply device in Fig. 9, in order to detect that it is the timing of placement or removal of any battery pack 1, as shown in Fig. 10, the rack main body 2 includes main placement/removal detection terminals 46 that detect a connected state of the battery pack 1, and the battery pack 1 includes main connection terminals 16 to be connected to the main placement/removal detection terminals 46. The main placement/removal detection terminals 46 and the main connection terminals 16 are detachably connected to each other through detachable-type sub-connectors 6. The sub-connectors 6 in Fig. 10 include a battery-side connector 6A disposed in a first connector 3A of detachable connectors 3; and a main body-side connector 6B disposed in a second connector 3B of the detachable connectors 3. The battery-side connector 6A and the main body-side connector 6B shown in the drawing can be inserted and detached from each other, and are located between output terminals 13 and input terminals 23, and are disposed in positions facing each other. The main body-side connector 6B contains the main placement/removal detection terminals 46 including a pair of connector terminals 46A. The battery-side connector 6A contains the main connection terminals 16 including a pair of contact terminals 16A. The battery-side connector 6A and the main body-side connector 6B have shapes that fit together. The battery-side connector 6A and the main body-side connector 6B are coupled to each other in a fit-together state, by which the pair of contact terminals 16A are connected to the pair of connector terminals 46A. In the sub-connectors 6, too, upon placement or removal of the battery pack 1, when the first connector 3A and the second connector 3B of the detachable connectors 3 are coupled to each other, the battery-side connector 6A and the main body-side connector 6B are coupled to each other, and when the first connector 3A and the second connector 3B are detached from each other, the battery-side connector 6A and the main body-side connector 6B are detached from each other.

The control circuit 50 detects a placement/removal state between the battery pack 1 and the rack main body 2 by detecting a connected state between the main placement/removal detection terminals 46 and the main connection terminals 16. The main placement/removal detection terminals 46 shown in Fig. 10 include the pair of connector terminals 46A. One of the connector terminals 46A is connected to a power supply 43 through a pull-up resistor 42. The other connector terminal 46A is inputted to the control circuit 50 through a detection line 44. The main connection terminals 16 form a short circuit 36 that couples the pair of contact terminals 16A to each other. In this structure, when the main connection terminals 16 are connected to the main placement/removal detection terminals 46, the pair of connector terminals 46A are short-circuited by the short circuit 36, by which a voltage inputted to the control circuit 50 through the detection line 44 changes. This occurs because when the main placement/removal detection terminals 46 and the main connection terminals 16 are connected to each other, the detection line 44 is connected to the power supply 43 through the pull-up resistor 42. Hence, when a voltage inputted from the detection line 44 increases to "High", the control circuit 50 determines that the main placement/removal detection terminals 46 and the main connection terminals 16 are in a connected state. When a voltage inputted from the detection line 44 decreases to "Low", the control circuit 50 determines that the main placement/removal detection terminals 46 and the main connection terminals 16 are in a non-connected state.

Furthermore, the main placement/removal detection terminals 46 and the main connection terminals 16 shown in Fig. 10 are structured to be connected to each other after the output terminals 13 and the input terminals 23 are connected to each other at timing at which the battery pack 1 is placed in the rack main body 2. Specifically, in the detachable connectors 3 and the sub-connectors 6 shown in the drawing, as with the aforementioned sub-connectors 4, the length of a contact portion between the main placement/removal detection terminals 46 and the main connection terminals 16 with the battery pack 1 placed in the fixed position is made shorter than the length of a contact portion between the output terminal 13 and the input terminal 23 so that the main placement/removal detection terminals 46 and the main connection terminals 16 can come into contact with each other after the output terminals 13 and the input terminals 23 come into contact with each other at the predetermined length. When the output terminals 13 and the input terminals 23 go to a state of coming into contact with each other at the predetermined length at timing at which the battery pack 1 is placed in the rack main body 2, the main placement/removal detection terminals 46 and the main connection terminals 16 go to a contact state, by which it is detected that the output terminals 13 and the input terminals 23 are in a connected state. Therefore, the control circuit 50 detects whether the battery pack 1 has been placed in the rack main body 2, by detecting a contact state between the main placement/removal detection terminals 46 and the main connection terminals 16.

In addition, at timing at which the battery pack 1 is removed from the rack main body 2, the main placement/removal detection terminals 46 and the main connection terminals 16 go to a non-connected state before the output terminals 13 and the input terminals 23 go to a non-connected state. Therefore, the control circuit 50 detects that the battery pack 1 is in a state of being removed from the rack main body 2, by detecting a non-connected state between the main placement/removal detection terminals 46 and the main connection terminals 16, before the output terminals 13 and the input terminals 23 go to a non-connected state.

When the control circuit 50 detects that all main placement/removal detection terminals 46 are in a connected state to the main connection terminals 16, the control circuit 50 places the main switch 51 in an ON state. The control circuit 50 does not place the main switches 51 in an ON state until detecting that the output terminals 13 of the battery packs 1 have been connected to all input terminals 23. By this, the occurrence of arc upon placement of a battery pack 1 can be securely prevented. Furthermore, when the control circuit 50 detects that any of the main placement/removal detection terminals 46 is in a non-connected state to main connection terminals 16, the control circuit 50 determines that it is a state in which a battery pack 1 is not attached to any of the input terminals 23 or a state in which a battery pack 1 is detached from any of the input terminals 23, and thus, places the main switches 51 in an OFF state. By this, the occurrence of arc upon removal of a battery pack 1 can be securely prevented.

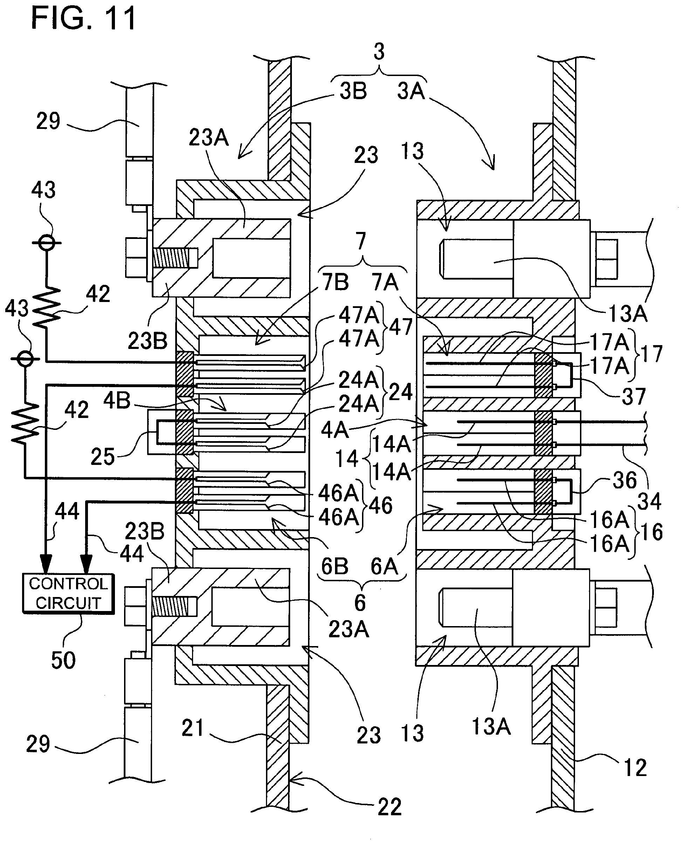

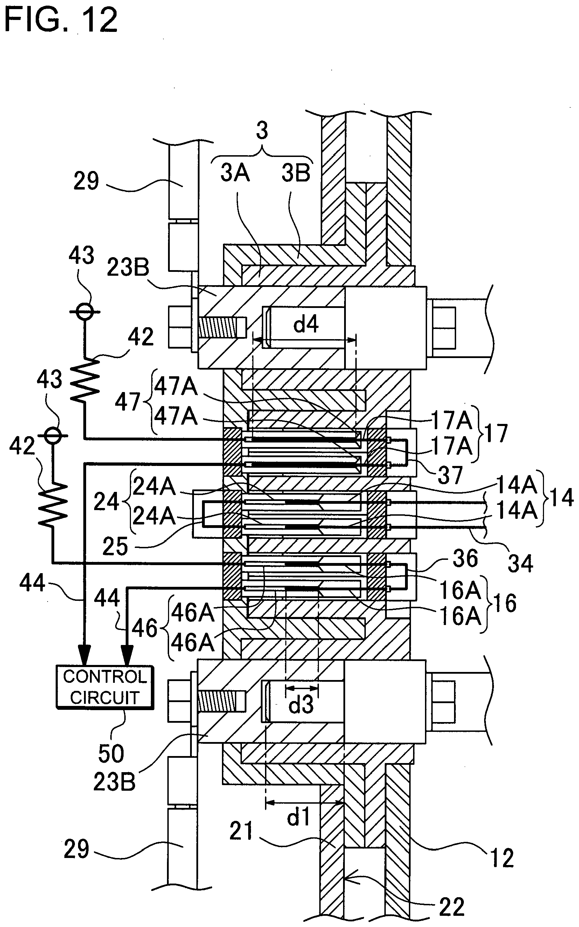

In the above-described power supply devices, upon placement of a battery pack 1, the placement of the battery pack 1 is detected after output terminals 13 of the battery pack 1 are connected to input terminals 23 on the side of the rack main body 2, and upon removal of the battery pack 1, a state in which the battery pack 1 is removed is detected before the output terminals 13 of the battery pack 1 and the input terminals 23 on the side of the rack main body 2 go to a non-connected state. Furthermore, a power supply device can also be such that in addition to the above-described structure, upon placement of a battery pack, a state in which the battery pack is placed is detected before output terminals of the battery pack are connected to input terminals on the rack main body side, and upon removal of the battery pack, completion of removal of the battery pack is detected after the output terminals of the battery pack and the input terminals on the rack main body side go to a non-connected state. This power supply device can be implemented by structuring a coupling portion between the battery pack and the rack main body in the manner shown in Figs. 11 and 12.

In the power supply device, as shown in Figs. 11 and 12, a rack main body 2 includes main placement/removal detection terminals 46 and sub-placement/removal detection terminals 47 that detect a placement state of a battery pack 1, and the battery pack 1 includes: main connection terminals 16 to be connected to the main placement/removal detection terminals 46; and sub-connection terminals 17 to be connected to the sub-placement/removal detection terminals 47. The main placement/removal detection terminals 46 and the main connection terminals 16 are detachably connected to each other through detachable-type sub-connectors 6. The sub-placement/removal detection terminals 47 and the sub-connection terminals 17 are detachably connected to each other through detachable-type sub-connectors 7. The sub-connectors 6 and 7 in Fig. 11 include battery-side connectors 6A and 7A disposed in a first connector 3A of detachable connectors 3; and main body-side connectors 6B and 7B disposed in a second connector 3B of the detachable connectors 3. The battery-side connectors 6A and 7A and the main body-side connectors 6B and 7B shown in the drawings can be inserted and detached from each other, and are located between output terminals 13 and input terminals 23, and are disposed in positions facing each other. The main body-side connector 6B contains the main placement/removal detection terminals 46 including a pair of connector terminals 46A. The battery-side connector 6A contains the main connection terminals 16 including a pair of contact terminals 16A. In addition, the main body-side connector 7B contains the sub-placement/removal detection terminals 47 including a pair of connector terminals 47A. The battery-side connector 7A contains the sub-connection terminals 17 including a pair of contact terminals 17A. The battery-side connectors 6A and 7A and the main body-side connectors 6B and 7B have shapes that fit together. The battery-side connectors 6A and 7A and the main body-side connectors 6B and 7B are coupled to each other in a fit-together state, by which the pairs of contact terminals 16A and 17A are connected to the pairs of connector terminals 46A and 47A, respectively. In the sub-connectors 6 and 7, too, upon placement or removal of the battery pack 1, when the first connector 3A and the second connector 3B of the detachable connectors 3 are coupled to each other, the battery-side connectors 6A and 7A and the main body-side connectors 6B and 7B are coupled to each other, and when the first connector 3A and the second connector 3B are detached from each other, the battery-side connectors 6A and 7A and the main body-side connectors 6B and 7B are detached from each other.

A control circuit 50 detects a placement/removal state between the battery pack 1 and the rack main body 2 by detecting a connected state between the main placement/removal detection terminals 46 and the main connection terminals 16 and a connected state between the sub-placement/removal detection terminals 47 and the sub-connection terminals 17. In the main placement/removal detection terminals 46 and the sub-placement/removal detection terminals 47 shown in Figs. 11 and 12, one connector terminal 46A, 47A is connected to a power supply 43 through a pull-up resistor 42, and the other connector terminal 46A, 47A is inputted to the control circuit 50 through a detection line 44. The main connection terminals 16 and the sub-connection terminals 17 respectively form short circuits 36 and 37 that couple the corresponding pairs of contact terminals 16A and 17A to each other. In these structures, when the main connection terminals 16 are connected to the main placement/removal detection terminals 46, the pair of connector terminals 46A are short-circuited by the short circuit 36, by which a voltage inputted to the control circuit 50 through the detection line 44 changes. In addition, when the sub-connection terminals 17 are connected to the sub-placement/removal detection terminals 47, the pair of connector terminals 47A are short-circuited by the short circuit 37, by which a voltage inputted to the control circuit 50 through the detection line 44 changes. Hence, the control circuit 50 can determine a connected state between the main placement/removal detection terminals 46 and the main connection terminals 16 and a connected state between the sub-placement/removal detection terminals 47 and the sub-connection terminals 17, by identifying "High" and "Low" of the voltages inputted from the respective detection lines 44.

Furthermore, the main placement/removal detection terminals 46 and the main connection terminals 16 shown in Figs. 11 and 12 are structured to be connected to each other after the output terminals 13 and the input terminals 23 are connected to each other at timing at which the battery pack 1 is placed in the rack main body 2. In addition, the sub-placement/removal detection terminals 47 and the sub-connection terminals 17 are structured to be connected to each other before the output terminals 13 and the input terminals 23 are connected to each other at timing at which the battery pack 1 is placed in the rack main body 2. Specifically, in the detachable connectors 3 and the sub-connectors 6 and 7, as shown in Fig. 12, the length (d3) of a contact portion between the main placement/removal detection terminals 46 and the main connection terminals 16 with the battery pack 1 placed in the fixed position is made shorter than the length (d1) of a contact portion between the output terminal 13 and the input terminal 23, and the length (d4) of a contact portion between the sub-placement/removal detection terminals 47 and the sub-connection terminals 17 is made longer than the length (d1) of the contact portion between the output terminal 13 and the input terminal 23.

By this structure, in the power supply device, at timing at which the battery pack 1 is placed in the rack main body 2, before the output terminals 13 are connected to the input terminals 23, the sub-placement/removal detection terminals 47 and the sub-connection terminals 17 go to a connected state, and then the output terminals 13 and the input terminals 23 go to a connected state, and then the main placement/removal detection terminals 46 and the main connection terminals 16 go to a connected state. On the other hand, at timing at which the battery pack 1 is removed from the rack main body 2, before the output terminals 13 and the input terminals 23 go to a non-connected state, the main placement/removal detection terminals 46 and the main connection terminals 16 go to a non-connected state, and then the output terminals 13 and the input terminals 23 go to a non-connected state, and then the sub-placement/removal detection terminals 47 and the sub-connection terminals 17 go to a non-connected state.

Therefore, when the control circuit 50 detects that the sub-placement/removal detection terminals 47 and the sub-connection terminals 17 which are in a non-connected state go to a connected state, the control circuit 50 determines that it is the timing at which the battery pack 1 is placed in the rack main body 2, and thus, places main switches 51 in an OFF state. Furthermore, when, after that, the control circuit 50 detects that the main placement/removal detection terminals 46 and the main connection terminals 16 which are in a non-connected state go to a connected state, the control circuit 50 determines that the battery pack 1 has been placed in the fixed position of the rack main body 2, and thus, places the main switches 51 in an ON state. By this, the occurrence of arc upon placement of the battery pack 1 can be securely prevented.

In addition, when the control circuit 50 detects that the main placement/removal detection terminals 46 and the main connection terminals 16 which are in the connected state go to a non-connected state, the control circuit 50 determines that it is the timing at which the battery pack 1 is removed from the rack main body 2, and thus, places the main switches 51 in an OFF state. Furthermore, when, after that, the control circuit 50 detects that the sub-placement/removal detection terminals 47 and the sub-connection terminals 17 which are in the connected state go to a non-connected state, the control circuit 50 determines that the battery pack 1 has been removed from the rack main body 2, and thus, places the main switches 51 in an ON state or holds the main switches 51 in the OFF state. By this, the occurrence of arc upon removal of the battery pack 1 can be securely prevented.

Here, in a power supply device in which all battery packs 1 are connected in series with each other, when the control circuit 50 detects that all main placement/removal detection terminals 46 are in a connected state to the main connection terminals 16, the control circuit 50 places the main switch 51 in an ON state. The power supply device does not place the main switches 51 in an ON state until detecting that the output terminals 13 of the battery packs 1 have been connected to all input terminals 23. In addition, in the power supply device, when it is detected that any of the sub-placement/removal detection terminals 47 is in a non-connected state to sub-connection terminals 17, it is determined that it is a state in which a battery pack 1 is not attached to any of the input terminals 23, and thus, the main switches 51 are placed in an OFF state.

Note, however, that in a power supply device, as shown in Fig. 8, a plurality of battery packs 1 may be connected in series and parallel with each other. In this power supply device, power can also be supplied from any one of the plurality of battery units 9, each including a plurality of battery packs 1 connected in series with each other. In the power supply device, even when it is detected that any of sub-placement/removal detection terminals 47 is in a non-connected state to sub-connection terminals 17 (in this case, not all main placement/removal detection terminals 46 are in a connected state to main connection terminals 16), main switch 51 are placed in an ON state and power can be supplied from any one of the battery units 9. In this power supply device, when any of the sub-placement/removal detection terminals 47 and sub-connection terminals 17 are in a connected state and when main placement/removal detection terminals 46 and main connection terminals 16 are in a non-connected state, it is determined that it is the timing at which a battery pack 1 is placed or the timing at which a battery pack 1 is removed, and thus, the main switches 51 are placed in an OFF state. By this, the occurrence of arc upon placement/removal of a battery pack 1 can be securely prevented.

In the above-described power supply devices, charging and discharging are controlled by the power controller 5 with a predetermined number of battery packs 1 placed in the rack main body 2. As shown in Figs. 4 and 9, the power controller 5 charges the batteries 10 in the battery packs 1 with power supplied from a charging power supply 65, and discharges from the charged batteries 10 to supply power to a load 61. Hence, the power controller 5 has charging mode and discharging mode. The load 61 and the charging power supply 65 are connected to the power controller 5 through a discharging switch 53 and a charging switch 54, respectively. The ON/OFF of the discharging switch 53 and the charging switch 54 are switched by the control circuit 50 in the power controller 5. In the charging mode, the control circuit 50 switches the charging switch 54 to ON and switches the discharging switch 53 to OFF, and switches a charging and discharging control unit 52 to charging mode, to allow charging of the battery packs 1 from the charging power supply 65. When the charging is completed and the battery packs 1 are at full charge or when capacity is charged to a predetermined value or more, in response to a request from an external source, the control circuit 50 switches the charging switch 54 to OFF and the discharging switch 53 to ON to switch to discharging mode, and switches the charging and discharging control unit 52 to discharging mode, to allow discharging to the load 61 from the power supply device. In addition, if necessary, power supply to the load 61 and charging of the battery packs 1 can also be performed simultaneously by switching the charging switch 54 to ON and discharging switch 53 to ON, and switching the charging and discharging control unit 52 to charging and discharging mode.

In the power controller 5 shown in the drawings, the output side is connected to the load 61. The load 61 supplies power to an external device 62 through an output-side power converter 55. The output-side power converter 55 is a DC/AC inverter 55A that converts direct-current power supplied from the battery packs 1 into alternating-current power. Note that when a load that can be driven with direct current is connected, needless to say, a DC/DC converter can be used instead of a DC/AC inverter.

Furthermore, the power controller 5 shown in the drawings has the charging power supply 65 connected to the power controller 5, as a power supply that charges the battery packs 1. The charging power supply 65 is a power generator 66, such as a solar cell, or a utility power supply 67. For the power generator 66, a solar cell panel, a wind power generator, a tidal power generator, or a natural energy power generator using natural energy such as a geothermal power generator, or a fuel cell or a power generator such as a gas power generator can be used. In the drawings, as the power generator 66, a solar cell panel 66A is used. In addition to such a power generator 66, the utility power supply 67 can also be added for backup. By this, when power obtained by the power generator 66 becomes insufficient or in case of an emergency, the battery packs 1 can be charged using the utility power supply 67. Furthermore, the battery packs 1 can also be charged using midnight power of the utility power supply 67.

Furthermore, input-side power converters 56 that convert power to be supplied into power suitable for charging the battery packs 1 are provided between the charging power supply 65 and the charging and discharging control unit 52. In an example of Fig. 4, a DC/DC converter 56A is connected between the solar cell panel 66A which is the power generator 66 and the charging and discharging control unit 52. In addition, an AC/DC converter 56B that converts an alternating current of 100 V to a direct current is connected between the utility power supply 67 and the charging and discharging control unit 52. By these input-side power converters 56, the battery packs 1 can be charged with appropriate power. Note that in order to reduce a loss caused by voltage conversion through such input-side power converters 56, etc., needless to say, pulse charging using a switching element can also be used.

Furthermore, in the above-described power supply devices, the battery pack 1 includes communication means for outputting information detected by the electronic circuit 30 to the power controller 5 of the rack main body 2. The battery pack 1 shown in the drawings has a connector portion 18 provided on the front side of the outer case 12, and performs communication with the power controller 5 through the connector portion 18. Furthermore, the electronic circuit 30 can also receive a signal from the power controller 5 and perform a process. For example, the configuration may be such that an abnormal signal is detected on the side of the battery pack 1 and transmitted to the power controller 5, and a stop of power output or a stop of charging is instructed on the side of the power controller 5. For the input and output connections of the connector portion 18, for example, a serial connection such as RS-422, RS-423, RS-485, or USB, a parallel connection, or an electrical, magnetic, or optical connection through a network such as a LAN can be used to perform communication. In the example of Fig. 4, the connector portion 18 allows an optical fiber to be connected to the connector portion 18, as a cable 28. By thus using an optical fiber for information transmission, a situation can be avoided where electromagnetic interference, high-frequency noise, etc., occurring from a battery pack 1 or other external sources influence on the external power controller 5, another battery pack 1 connected in series with the battery pack 1, etc. In addition, in the battery pack 1, the connector portion 18 for communication is disposed on a front surface which is a surface on the opposite side of a back surface of the outer case 12 where the high-voltage output terminals 13 are provided. Thus, a signal terminal for communication is disposed so as to be distanced from the high-voltage output terminals 13, enabling to suppress the influence of high-frequency noise of an output current.

## Claims

1. A rack-mount power supply device comprising:
a plurality of battery packs (1); and
a rack main body (2) allowing the battery packs (1) to be removably placed therein,
wherein each of the battery packs (1) comprises:
a battery (10) including a plurality of unit cells (11) connected in series and/or parallel with each other;
an outer case (12) housing the battery (10); and
positive and negative output terminals (13) provided so as to come out on a back surface of the outer case (12), and connected to an output side of the battery (10),
wherein
the rack main body (2) includes a plurality of housing spaces (20) housing the battery packs (1) in fixed positions, respectively, and includes input terminals (23) on a facing surface (22) being an inner surface of each of the housing spaces (20) and facing positive and negative output terminals (13) provided to a corresponding battery pack (1), the output terminals (13) being to be electrically connected to the input terminals (23) in a fitting state, and the input terminals (23) are wired in series and/or parallel with each other on back sides of the respective facing surfaces (22), and
the plurality of battery packs (1) are connected in series and/or parallel with each other, with the battery packs (1) guided into the housing spaces (20) of the rack main body (2) and the output terminals (13) connected to the input terminals (23),
**characterized in that**
each of the battery packs (1) further comprises:
an electronic circuit (30) detecting and monitoring states of the plurality of unit cells (11);
a shutdown circuit (31) controlling the electronic circuit (30) to ON or OFF; and
placement detection terminals (14) detecting that the battery pack (1) has been placed in the fixed position of the rack main body (2),
the rack main body (2) includes coupling terminals (24) to be connected to the placement detection terminals (14) with the battery pack (1) placed in the fixed position, and
the shutdown circuit (31) places the electronic circuit (30) in an ON state when the placement detection terminals (14) and the coupling terminals (24) are in a connected state, and places the electronic circuit (30) in an OFF state when the placement detection terminals (14) and the coupling terminals (24) are in a non-connected state.

2. The rack-mount power supply device according to claim 1, wherein the output terminals (13) of each of the battery packs (1) and corresponding input terminals (23) of the rack main body (2) are detachably connected to each other through detachable connectors (3).

3. The rack-mount power supply device according to claim 1 or 2, wherein the placement detection terminals (14) include a pair of contact terminals (14A), and the coupling terminals (24) form a short circuit (25) short-circuiting the pair of contact terminals (14A), and the shutdown circuit (31) controls the electronic circuit (30) to ON by detecting the short circuit of the pair of contact terminals (14A).

4. The rack-mount power supply device according to any one of claims 1-3,
wherein the rack main body (2) includes a power controller (5) controlling charging and discharging of the plurality of battery packs (1) connected to each other, and the power controller (5) includes: main switches (51) shutting off power inputted from the battery packs (1); and a control circuit (50) controlling the main switches (51) to ON or OFF, and
wherein the control circuit (50) controls the main switches (51) to ON or OFF by determining connected states of the battery packs (1).

5. The rack-mount power supply device according to claim 4,
wherein the rack main body (2) includes main placement/removal detection terminals (46) detecting a connected state of a corresponding battery pack (1), and the battery pack (1) includes main connection terminals (16) to be connected to the main placement/removal detection terminals (46),
wherein the main placement/removal detection terminals (46) and the main connection terminals (16) are structured to be connected to each other after the output terminals (13) and the input terminals (23) are connected to each other at timing at which the battery pack (1) is placed in the rack main body (2), and
wherein the control circuit (50) places the main switches (51) in an OFF state when any of the main placement/removal detection terminals (46) and main connection terminals (16) are in a non-connected state, and places the main switches (51) in an ON state when all of the main placement/removal detection terminals (46) and the main connection terminals (16) are in a connected state.

6. The rack-mount power supply device according to claim 4,
wherein the rack main body (2) includes main placement/removal detection terminals (46) and sub-placement/removal detection terminals (47) detecting a connected state of a corresponding battery pack (1), and the battery pack (1) includes: main connection terminals (16) to be connected to the main placement/removal detection terminals (46); and sub-connection terminals (17) to be connected to the sub-placement/removal detection terminals (47),
wherein the main placement/removal detection terminals (46) and the main connection terminals (16) are structured to be connected to each other after the output terminals (13) and the input terminals (23) are connected to each other at timing at which the battery pack (1) is placed in the rack main body (2),
wherein the sub-placement/removal detection terminals (47) and the sub-connection terminals (17) are structured to be connected to each other before the output terminals (13) and the input terminals (23) are connected to each other at timing at which the battery pack (1) is placed in the rack main body (2), and
wherein the control circuit (50) places the main switches (51) in an OFF state when the sub-placement/removal detection terminals (47) and the sub-connection terminals (17) are in a connected state and when the main placement/removal detection terminals (46) and the main connection terminals (16) are in a non-connected state, and places the main switches (51) in an ON state when the sub-placement/removal detection terminals (47) and the sub-connection terminals (17) are in a connected state and when the main placement/removal detection terminals (46) and the main connection terminals (16) are in a connected state.

7. A battery pack including detachable connectors, the battery pack comprising:
an outer case (12) removably set in a rack main body (2);
a battery (10) including a plurality of unit cells (11) connected in series and/or parallel with each other, the battery (10) being housed in the outer case (12); and
detachable connectors (3) connecting outputs of the battery (10) to the rack main body (2),
wherein the detachable connectors (3) comprise:
a first connector (3A) fixed to the outer case (12);
a second connector (3B) fixed to the rack main body (2), the first connector (3A) being detachably coupled to the second connector (3B),
wherein the first connector (3A) includes output terminals (13) fixed to a back surface of the outer case (12) and connected to the battery (10), and the second connector (3B) includes input terminals (23) allowing the battery (10) to be connected in series or parallel therewith on a side of the rack main body (2), the output terminals (13) being connected to the input terminals (23), and
wherein the first connector (3A) is coupled to the second connector (3B) with the outer case (12) set in the rack main body (2), whereby the battery (10) is connected to the input terminals (23),
**characterized by**
an electronic circuit (30) detecting and monitoring states of the plurality of unit cells (11);
and a shutdown circuit (31) controlling the electronic circuit (30) to ON or OFF,
wherein the first connector (3A) includes placement detection terminals (14) detecting that the outer case (12) has been placed in a fixed position of the rack main body (2), and the second connector (3B) includes coupling terminals (24) to be connected to the placement detection terminals (14), and
wherein the shutdown circuit (31) places the electronic circuit (30) in an ON state when the placement detection terminals (14) and the coupling terminals (24) are in a connected state, and places the electronic circuit (30) in an OFF state when the placement detection terminals (14) and the coupling terminals (24) are in a non-connected state.

8. The battery pack including detachable connectors according to claim 7, wherein the placement detection terminals (14) include a pair of contact terminals (14A), and the coupling terminals (24) form a short circuit (25) short-circuiting the pair of contact terminals (14A), and the shutdown circuit (31) controls the electronic circuit (30) to ON by detecting the short circuit of the pair of contact terminals (14A).

9. The battery pack including detachable connectors according to claim 7 or 8,
wherein the second connector (3B) includes main placement/removal detection terminals (46) detecting a connected state of the first connector (3A), and the first connector (3A) includes main connection terminals (16) to be connected to the main placement/removal detection terminals (46),
wherein the main placement/removal detection terminals (46) and the main connection terminals (16) are structured to be connected to each other after the output terminals (13) and the input terminals (23) are connected to each other at timing at which the outer case (12) is placed in the rack main body (2), and
wherein a placement state between the outer case (12) and the rack main body (2) is detected by detecting a connected state between the main placement/removal detection terminals (46) and the main connection terminals (16).

10. The battery pack including detachable connectors according to claim 7 or 8,
wherein the second connector (3B) includes main placement/removal detection terminals (46) and sub-placement/removal detection terminals (47) detecting a connected state of the first connector (3A), and the first connector (3A) includes: main connection terminals (16) to be connected to the main placement/removal detection terminals (46); and sub-connection terminals (17) to be connected to the sub-placement/removal detection terminals (47),
wherein the main placement/removal detection terminals (46) and the main connection terminals (16) are structured to be connected to each other after the output terminals (13) and the input terminals (23) are connected to each other at timing at which the outer case (12) is placed in the rack main body (2),
wherein the sub-placement/removal detection terminals (47) and the sub-connection terminals (17) are structured to be connected to each other before the output terminals (13) and the input terminals (23) are connected to each other at timing at which the outer case (12) is placed in the rack main body (2), and
wherein a placement state between the outer case (12) and the rack main body (2) is detected by detecting a connected state between the main placement/removal detection terminals (46) and the main connection terminals (16) and a connected state between the sub-placement/removal detection terminals (47) and the sub-connection terminals (17).

## Patentansprüche

1. Rackhalterung-Stromversorgungsvorrichtung, die umfasst:
eine Vielzahl von Batterie-Packs (1); und
einen Rack-Hauptkörper (2), in dem die Batterie-Packs (1) entfernbar untergebracht werden können,
wobei jedes der Batterie-Packs (1) umfasst:
eine Batterie (10) mit einer Vielzahl von Einheitszellen (11), die in Reihe und/oder parallel miteinander verbunden sind;
ein äußeres Gehäuse (12), das die Batterie (10) aufnimmt; und
positive und negative Ausgangsanschlüsse (13), die so vorgesehen sind, dass sie auf einer Rückseite des äußeren Gehäuses (12) herauskommen, und die mit einer Ausgangsseite der Batterie (10) verbunden sind,
wobei
der Rack-Hauptkörper (2) eine Vielzahl von Gehäuseräumen (20) enthält, welche die Batterie-Packs (1) jeweils in festen Positionen aufnehmen, und Eingangsanschlüsse (23) auf einer zugewandten Oberfläche (22) enthält, die eine innere Oberfläche von jedem der Gehäuseräume (20) ist und positiven und negativen Ausgangsanschlüssen (13) gegenüberliegt, die bei einem entsprechenden Batterie-Pack (1) vorgesehen sind, wobei die Ausgangsanschlüsse (13) in einem Befestigungszustand elektrisch mit den Eingangsanschlüssen (23) zu verbinden sind, und die Eingangsanschlüsse (23) sind in Reihe und/oder parallel zueinander auf Rückseiten der jeweiligen zugewandten Oberflächen (22) verdrahtet, und
die Vielzahl von Batterie-Packs (1) in Reihe und/oder parallel zueinander geschaltet sind, wobei die Batterie-Packs (1) in die Gehäuseräume (20) des Rack-Hauptkörpers (2) geführt sind und die Ausgangsanschlüsse (13) mit den Eingangsanschlüssen (23) verbunden sind,
**dadurch gekennzeichnet, dass**
jedes der Batterie-Packs (1) ferner umfasst:
eine elektronische Schaltung (30), die Zustände der Vielzahl von Einheitszellen (11) detektiert und überwacht;
eine Abschaltschaltung (31), welche die elektronische Schaltung (30) auf EIN oder AUS steuert; und
Platzierungs-Detektionsanschlüsse (14), die detektieren, dass das Batterie-Pack (1) in der festen Position des Rack-Hauptkörpers (2) platziert wurde, wobei
der Rack-Hauptkörper (2) Kopplungsanschlüsse (24) enthält, die mit den Platzierungs-Detektionsanschlüssen (14) zu verbinden sind, wobei das Batterie-Pack (1) in der festen Position angeordnet ist, und
die Abschaltschaltung (31) die elektronische Schaltung (30) in einen EIN-Zustand versetzt, wenn sich die Platzierungs-Detektionsanschlüsse (14) und die Kopplungsanschlüsse (24) in einem verbundenen Zustand befinden, und die elektronische Schaltung (30) in einen AUS-Zustand versetzt, wenn sich die Platzierungs-Detektionsanschlüsse (14) und die Kopplungsanschlüsse (24) in einem nicht verbundenen Zustand befinden.

2. Rackhalterung-Stromversorgungsvorrichtung gemäß Anspruch 1, wobei die Ausgangsanschlüsse (13) von jedem der Batterie-Packs (1) und entsprechende Eingangsanschlüsse (23) des Rack-Hauptkörpers (2) durch lösbare Verbinder (3) lösbar miteinander verbunden sind.

3. Rackhalterung-Stromversorgungsvorrichtung gemäß Anspruch 1 oder 2, wobei die Platzierungs-Detektionsanschlüsse (14) ein Paar Kontaktanschlüsse (14A) umfassen und die Kopplungsanschlüsse (24) einen Kurzschluss (25) bilden, der das Paar von Kontaktanschlüssen (14A) kurzschließt, und die Abschaltschaltung (31) die elektronische Schaltung (30) durch Detektieren des Kurzschlusses des Paares von Kontaktanschlüssen (14A) auf EIN steuert.

4. Rackhalterung-Stromversorgungsvorrichtung gemäß einem der Ansprüche 1 bis 3,
wobei der Rack-Hauptkörper (2) eine Leistungs-Steuerung (5) enthält, die das Laden und Entladen der Vielzahl von miteinander verbundenen Batterie-Packs (1) steuert, und die Leistungs-Steuerung (5) enthält: Hauptschalter (51), welche die von den Batterie-Packs (1) eingegebene Leistung abschalten; und eine Steuerschaltung (50), welche die Hauptschalter (51) auf EIN oder AUS steuert, und
wobei die Steuerschaltung (50) die Hauptschalter (51) auf EIN oder AUS steuert, indem sie verbundene Zustände der Batterie-Packs (1) bestimmt.

5. Rackhalterung-Stromversorgungsvorrichtung gemäß Anspruch 4,
wobei der Rack-Hauptkörper (2) Haupt-Platzierungs-/Entfernungs-Detektionsanschlüsse (46) enthält, die einen verbundenen Zustand eines entsprechenden Batterie-Packs (1) detektieren, und das Batterie-Pack (1) Haupt-Verbindungsanschlüsse (16) enthält, die mit den Haupt-Platzierungs-/ Entfernungs-Detektionsanschlüssen (46) zu verbinden sind,
wobei die Haupt-Platzierungs-/Entfernungs-Detektionsanschlüsse (46) und die Haupt-Verbindungsanschlüsse (16) so strukturiert sind, dass sie miteinander verbunden sind, nachdem die Ausgangsanschlüsse (13) und die Eingangsanschlüsse (23) zu einer Zeit miteinander verbunden sind, zu der das Batterie-Pack (1) in dem Rack-Hauptkörper (2) platziert ist, und
wobei die Steuerschaltung (50) die Hauptschalter (51) in einen AUS-Zustand versetzt, wenn sich einer der Haupt-Platzierungs-/Entfernungs-Detektionsanschlüsse (46) und der Haupt-Verbindungsanschlüsse (16) in einem nicht verbundenen Zustand befinden, und die Hauptschalter (51) in einen EIN-Zustand versetzt, wenn sich alle Haupt-Platzierungs-/Entfernungs-Detektionsanschlüsse (46) und die Haupt-Verbindungsanschlüsse (16) in einem verbundenen Zustand befinden.

6. Rackhalterung-Stromversorgungsvorrichtung gemäß Anspruch 4,
wobei der Rack-Hauptkörper (2) Haupt-Platzierungs-/Entfernungs-Detektionsanschlüsse (46) und Sub-Platzierungs-/Entfernungs-Detektionsanschlüsse (47) aufweist, die einen verbundenen Zustand eines entsprechenden Batterie-Packs (1) detektieren, und das Batterie-Pack (1) enthält:
Haupt-Verbindungsanschlüsse (16), die mit den Haupt-Platzierungs-/Entfernungs-Detektionsanschlüssen (46) zu verbinden sind; und
Sub-Verbindungsanschlüsse (17), die mit den Sub-Platzierungs-/Entfernungs-Detektionsanschlüssen (47) zu verbinden sind,
wobei die Haupt-Platzierungs-/Entfernungs-Detektionsanschlüsse (46) und die Haupt-Verbindungsanschlüsse (16) so strukturiert sind, dass sie miteinander verbunden sind, nachdem die Ausgangsanschlüsse (13) und die Eingangsanschlüssen (23) zu einer Zeit miteinander verbunden sind, zu der das Batterie-Pack (1) in dem Rack-Hauptkörper (2) platziert ist,
wobei die Sub-Platzierungs-/Entfernungs-Detektionsanschlüsse (47) und die Sub-Verbindungsanschlüsse (17) so strukturiert sind, dass sie miteinander verbunden sind, bevor die Ausgangsanschlüsse (13) und die Eingangsanschlüsse (23) zu einer Zeit miteinander verbunden sind, zu der das Batterie-Pack (1) in dem Rack-Hauptkörper (2) platziert ist, und
wobei die Steuerschaltung (50) die Hauptschalter (51) in einen AUS-Zustand versetzt, wenn sich die Sub-Platzierungs-/Entfernungs-Detektionsanschlüsse (47) und die Sub-Verbindungsanschlüsse (17) in einem verbundenen Zustand befinden und wenn sich die Haupt-Platzierungs-/ Entfernungs-Detektionsanschlüsse (46) und die Haupt-Verbindungsanschlüsse (16) in einem nicht verbundenen Zustand befinden, und die Hauptschalter (51) in einen EIN-Zustand versetzt, wenn die Sub-Platzierungs-/Entfernungs-Detektionsanschlüsse (47) und die Sub-Verbindungsanschlüsse (17) in einem verbundenen Zustand sind und wenn die Hauptplatzierungs-/Entfernungs-Detektionsanschlüsse (46) und die Haupt-Verbindungsanschlüsse (16) in einem verbundenen Zustand sind.

7. Batterie-Pack mit lösbaren Verbindern, wobei das Batterie-Pack umfasst:
ein äußeres Gehäuse (12), das entfernbar in einen Rack-Hauptkörper (2) eingesetzt ist;
eine Batterie (10) mit einer Vielzahl von Einheitszellen (11), die in Reihe und/oder parallel miteinander verbunden sind, wobei die Batterie (10) in dem äußeren Gehäuse (12) untergebracht ist; und
lösbare Verbinder (3), welche Ausgänge der Batterie (10) mit dem Rack-Hauptkörper (2) verbinden,
wobei die lösbaren Verbinder (3) umfassen:
einen ersten Verbinder (3A), der an dem äußeren Gehäuse (12) befestigt ist;
einen zweiten Verbinder (3B), der an dem Rack-Hauptkörper (2) befestigt ist, wobei der erste Verbinder (3A) lösbar mit dem zweiten Verbinder (3B) verbunden ist,
wobei der erste Verbinder (3A) Ausgangsanschlüsse (13) enthält, die an einer Rückseite des äußeren Gehäuses (12) befestigt und mit der Batterie (10) verbunden sind, und der zweite Verbinder (3B) Eingangsanschlüsse (23) enthält, die es ermöglichen, die Batterie (10) in Reihe oder parallel dazu auf einer Seite des Rack-Hauptkörpers (2) zu verbinden, wobei die Ausgangsanschlüsse (13) mit den Eingangsanschlüssen (23) verbunden sind, und
wobei der erste Verbinder (3A) mit dem zweiten Verbinder (3B) gekoppelt ist, wobei das äußere Gehäuse (12) in den Rack-Hauptkörper (2) eingesetzt ist, wodurch die Batterie (10) mit den Eingangsanschlüssen (23) verbunden ist, **gekennzeichnet durch**
eine elektronische Schaltung (30), die Zustände der Vielzahl von Einheitszellen (11) detektiert und überwacht;
und eine Abschaltschaltung (31), welche die elektronische Schaltung (30) auf EIN oder AUS steuert,
wobei der erste Verbinder (3A) Platzierungs-Detektionsanschlüsse (14) enthält, die detektieren, dass das äußere Gehäuse (12) in einer festen Position des Rack-Hauptkörpers (2) platziert wurde, und der zweite Verbinder (3B) Kopplungsanschlüsse (24) enthält, die mit den Platzierungs-Detektionsanschlüssen (14) zu verbinden sind, und
wobei die Abschaltschaltung (31) die elektronische Schaltung (30) in einen EIN-Zustand versetzt, wenn sich die Platzierungs-Detektionsanschlüsse (14) und die Kopplungsanschlüsse (24) in einem verbundenen Zustand befinden, und die elektronische Schaltung (30) in einen AUS-Zustand versetzt, wenn sich die Platzierungs-Detektionsanschlüsse (14) und die Kopplungsanschlüsse (24) in einem nicht verbundenen Zustand befinden.

8. Batterie-Pack, das lösbare Verbinder enthält, gemäß Anspruch 7, wobei die Platzierungs-Detektionsanschlüsse (14) ein Paar von Kontaktanschlüssen (14A) enthalten und die Kopplungsanschlüsse (24) einen Kurzschluss (25) bilden, der das Paar von Kontaktanschlüssen (14A) kurzschließt, und die Abschaltschaltung (31) die elektronische Schaltung (30) durch Detektieren des Kurzschlusses des Paares von Kontaktanschlüssen (14A) auf EIN steuert.

9. Batterie-Pack, das lösbare Verbinder enthält, gemäß Anspruch 7 oder 8, wobei der zweite Verbinder (3B) Haupt-Platzierungs-/Entfernungs-Detektionsanschlüsse (46) aufweist, die einen verbundenen Zustand des ersten Verbinders (3A) detektieren, und der erste Verbinder (3A) Haupt-Verbindungsanschlüsse (16) aufweist, die mit den Haupt-Platzierungs-/Entfernungs-Detektionsanschlüssen (46) zu verbinden sind,
wobei die Haupt-Platzierungs-/Entfernungs-Detektionsanschlüsse (46) und die Haupt-Verbindungsanschlüsse (16) so strukturiert sind, dass sie miteinander verbunden sind, nachdem die Ausgangsanschlüsse (13) und die Eingangsanschlüssen (23) zu einer Zeit miteinander verbunden sind, zu der das äußere Gehäuse (12) in dem Rack-Hauptkörper (2) angeordnet ist, und
wobei ein Platzierungszustand zwischen dem äußeren Gehäuse (12) und dem Rack-Hauptkörper (2) durch Detektieren eines verbundenen Zustands zwischen den Haupt-Platzierungs-/Entfernungs-Detektionsanschlüssen (46) und den Haupt-Verbindungsanschlüssen (16) detektiert wird.

10. Batterie-Pack, das lösbare Verbinder enthält, gemäß Anspruch 7 oder 8, wobei der zweite Verbinder (3B) Haupt-Platzierungs-/Entfernungs-Detektionsanschlüsse (46) und Sub-Platzierungs-/Entfernungs-Detektionsanschlüsse (47) aufweist, die einen verbundenen Zustand des ersten Verbinders (3A) detektieren, und der erste Verbinder (3A) aufweist: Haupt-Verbindungsanschlüsse (16), die mit den Haupt-Platzierungs-/Entfernungs-Detektionsanschlüssen (46) zu verbinden sind; und Sub-Verbindungsanschlüsse (17), die mit den Sub-Platzierungs-/Entfernungs-Detektionsanschlüssen (47) zu verbinden sind,
wobei die Haupt-Platzierungs-/Entfernungs-Detektionsanschlüsse (46) und die Haupt-Verbindungsanschlüsse (16) so strukturiert sind, dass sie miteinander verbunden sind, nachdem die Ausgangsanschlüsse (13) und die Eingangsanschlüssen (23) zu einer Zeit miteinander verbunden sind, zu der das äußere Gehäuse (12) in dem Rack-Hauptkörper (2) angeordnet ist,
wobei die Sub-Platzierungs-/Entfernungs-Detektionsanschlüsse (47) und die Sub-Verbindungsanschlüsse (17) so strukturiert sind, dass sie miteinander verbunden sind, bevor die Ausgangsanschlüsse (13) und die Eingangsanschlüsse (23) zu dem Zeitpunkt miteinander verbunden sind, zu der das äußere Gehäuse (12) in dem Rack-Hauptkörper (2) angeordnet ist, und
wobei ein Platzierungszustand zwischen dem äußeren Gehäuse (12) und dem Rack-Hauptkörper (2) durch Detektieren eines verbundenen Zustandes zwischen den Haupt-Platzierungs-/Entfernungs-Detektionsanschlüssen (46) und den Haupt-Verbindungsanschlüssen (16) und eines verbundenen Zustandes zwischen den Sub-Platzierungs-/Entfernungs-Detektionsanschlüssen (47) und den Sub-Verbindungsanschlüssen (17) detektiert wird.

## Revendications

1. Dispositif d'alimentation électrique monté sur bâti comprenant :
une pluralité de bloc-batterie (1) ; et
un corps principal de bâti (2) permettant aux blocs-batterie (1) d'être placés de manière amovible dans celui-ci,
dans lequel chacun des blocs-batterie (1) comprend :
une batterie (10) incluant une pluralité de cellules unitaires (11) connectées en série et/ou en parallèle entre elles ;
un boîtier extérieur (12) logeant la batterie (10) ; et
des bornes de sortie (13) positive et négative situées de manière à sortir sur une surface arrière du boîtier extérieur (12), et connectées à un côté sortie de la batterie (10),
dans lequel
le corps principal de bâti (2) inclut une pluralité d'espaces de logement (20) logeant les blocs-batterie (1) dans des positions fixes, respectivement, et inclut des bornes d'entrée (23) sur une surface opposée (22) qui est une surface intérieure de chacun des espaces de logement (20) et des bornes de sortie (13) positive et négative opposées situées sur un bloc-batterie (1) correspondant, les bornes de sortie (13) devant être électriquement connectées aux bornes d'entrée (23) dans un état d'ajustement, et les bornes d'entrée (23) sont câblées en série et/ou en parallèle entre elles sur des côtés arrière des surfaces opposées (22) respectives, et
la pluralité de blocs-batterie (1) sont connectés en série et/ou en parallèle entre eux, avec les blocs-batterie (1) guidés dans les espaces de logement (20) du corps principal de bâti (2) et les bornes de sortie (13) connectées aux bornes d'entrée (23),
**caractérisé en ce que**
chacun des blocs-batterie (1) comprend en outre :
un circuit électronique (30) détectant et surveillant des états de la pluralité de cellules unitaires (11) ;
un circuit d'interruption (31) commandant le circuit électronique (30) sur ON ou OFF ; et
des bornes de détection de mise en place (14) détectant que le bloc-batterie (1) a été placé dans la position fixe du corps principal de bâti (2),
le corps principal de bâti (2) inclut des bornes de couplage (24) à connecter aux bornes de détection de mise en place (14) avec le bloc-batterie (1) placé dans la position fixe, et
le circuit d'interruption (31) place le circuit électronique (30) dans un état ON quand les bornes de détection de mise en place (14) et les bornes de couplage (24) sont dans un état connecté, et place le circuit électronique (30) dans un état OFF quand les bornes de détection de mise en place (14) et les bornes de couplage (24) sont dans un état non connecté.

2. Dispositif d'alimentation électrique monté sur bâti selon la revendication 1, dans lequel les bornes de sortie (13) de chacun des blocs-batterie (1) et des bornes d'entrée (23) correspondantes du corps principal de bâti (2) sont connectées de manière détachable entre elles par l'intermédiaire de connecteurs détachables (3).

3. Dispositif d'alimentation électrique monté sur bâti selon la revendication 1 ou 2, dans lequel les bornes de détection de mise en place (14) incluent une paire de bornes de contact (14A), et les bornes de couplage (24) forment un court-circuit (25) court-circuitant la paire de bornes de contact (14A), et le circuit d'interruption (31) commande le circuit électronique (30) sur ON en détectant le court-circuit de la paire de bornes de contact (14A).

4. Dispositif d'alimentation électrique monté sur bâti selon l'une quelconque des revendications 1 à 3,
dans lequel le corps principal de bâti (2) inclut un dispositif de commande d'alimentation (5) commandant la charge et la décharge de la pluralité de blocs-batterie (1) connectés entre eux, et le dispositif de commande d'alimentation (5) inclut : des commutateurs principaux (51) coupant l'énergie entrée depuis les blocs-batterie (1) ; et un circuit de commande (50) commandant les commutateurs principaux (51) sur ON ou OFF, et
dans lequel le circuit de commande (50) commande les commutateurs principaux (51) sur ON ou OFF en déterminant des états connectés des blocs-batterie (1).

5. Dispositif d'alimentation électrique monté sur bâti selon la revendication 4,
dans lequel le corps principal de bâti (2) inclut des bornes de détection de mise en place/retrait principales (46) détectant un état connecté d'un bloc-batterie (1) correspondant, et le bloc-batterie (1) inclut des bornes de connexion principales (16) à connecter aux bornes de détection de mise en place/retrait principales (46),
dans lequel les bornes de détection de mise en place/retrait principales (46) et les bornes de connexion principales (16) sont structurées pour être connectées entre elles après que les bornes de sortie (13) et les bornes d'entrée (23) ont été connectées entre elles au moment où le bloc-batterie (1) est placé dans le corps principal de bâti (2), et
dans lequel le circuit de commande (50) place les commutateurs principaux (51) dans un état OFF quand l'une quelconque des bornes de détection de mise en place/retrait principales (46) et des bornes de connexion principales (16) sont dans un état non connecté, et place les commutateurs principaux (51) dans un état ON quand toutes les bornes de détection de mise en place/retrait principales (46) et les bornes de connexion principales (16) sont dans un état connecté.

6. Dispositif d'alimentation électrique monté sur bâti selon la revendication 4,
dans lequel le corps principal de bâti (2) inclut des bornes de détection de mise en place/retrait principales (46) et des sous-bornes de détection de mise en place/retrait (47) détectant un état connecté d'un bloc-batterie (1) correspondant, et le bloc-batterie (1) inclut : des bornes de connexion principales (16) à connecter aux bornes de détection de mise en place/retrait principales (46) ; et des sous-bornes de connexion (17) à connecter aux sous-bornes de détection de mise en place/retrait (47),
dans lequel les bornes de détection de mise en place/retrait principales (46) et les bornes de connexion principales (16) sont structurées pour être connectées entre elles après que les bornes de sortie (13) et les bornes d'entrée (23) ont été connectées entre elles au moment où le bloc-batterie (1) a été placé dans le corps principal de bâti (2),
dans lequel les sous-bornes de détection de mise en place/retrait (47) et les sous-bornes de connexion (17) sont structurées pour être connectées entre elles avant que les bornes de sortie (13) et les bornes d'entrée (23) ne soient connectées entre elles au moment où le bloc-batterie (1) est placé dans le corps principal de bâti (2), et
dans lequel le circuit de commande (50) place les commutateurs principaux (51) dans un état OFF quand les bornes de détection de mise en place/retrait (47) et les sous-bornes de connexion (17) sont dans un état connecté et quand les bornes de détection de mise en place/retrait principales (46) et les bornes de connexion principales (16) sont dans un état non connecté, et place les commutateurs principaux (51) dans un état ON quand les sous-bornes de détection de mise en place/retrait (47) et les sous-bornes de connexion (17) sont dans un état connecté et quand les bornes de détection de mise en place/retrait principales (46) et les bornes de connexion principales (16) sont dans un état connecté.

7. Bloc-batterie incluant des connecteurs détachables, le bloc-batterie comprenant :
un boîtier extérieur (12) posé de manière amovible dans un corps principal de bâti (2) ;
une batterie (10) incluant une pluralité de cellules unitaires (11) connectées en série et/ou en parallèle entre elles, la batterie (10) étant logée dans le boîtier extérieur (12) ; et
des connecteurs détachables (3) connectant des sorties de la batterie (10) au corps principal de bâti (2),
dans lequel les connecteurs détachables (3) comprennent :
un premier connecteur (3A) fixé au boîtier extérieur (12) ;
un second connecteur (3B) fixé au corps principal de bâti (2), le premier connecteur (3A) étant couplé de manière détachable au second connecteur (3B),
dans lequel le premier connecteur (3A) inclut des bornes de sortie (13) fixées à une surface arrière du boîtier extérieur (12) et connectées à la batterie (10), et le second connecteur (3B) inclut des bornes d'entrée (23) permettant à la batterie (10) d'y être connectée en série ou en parallèle sur un côté du corps principal de bâti (2), les bornes de sortie (13) étant connectées aux bornes d'entrée (23), et
dans lequel le premier connecteur (3A) est couplé au second connecteur (3B) avec le boîtier extérieur (12) posé dans le corps principal de bâti (2), moyennant quoi la batterie (10) est connectée aux bornes d'entrée (23),
**caractérisé par**
un circuit électronique (30) détectant et contrôlant des états de la pluralité de cellules unitaires (11) ;
et un circuit d'interruption (31) commandant le circuit électronique (30) sur ON ou OFF,
dans lequel le premier connecteur (3A) inclut des bornes de détection de mise en place (14) détectant que le boîtier extérieur (12) a été placé dans une position fixe du corps principal de bâti (2), et le second connecteur (3B) inclut des bornes de couplage (24) à connecter aux bornes de détection de mise en place (14), et
dans lequel le circuit d'interruption (31) place le circuit électronique (30) dans un état ON quand les bornes de détection de mise en place (14) et les bornes de couplage (24) sont dans un état connecté, et place le circuit électronique (30) dans un état OFF quand les bornes de détection de mise en place (14) et les bornes de couplage (24) sont dans un état non connecté.

8. Bloc-batterie incluant des connecteurs détachables selon la revendication 7, dans lequel les bornes de détection de mise en place (14) incluent une paire de bornes de contact (14A), et les bornes de couplage (24) forment un court-circuit (25) court-circuitant la paire de bornes de contact (14A), et le circuit d'interruption (31) commande le circuit électronique (30) sur ON en détectant le court-circuit de la paire de bornes de contact (14A).

9. Bloc-batterie incluant des connecteurs détachables selon la revendication 7 ou 8,
dans lequel le second connecteur (3B) inclut des bornes de détection de mise en place/retrait principales (46) détectant un état connecté du premier connecteur (3A), et le premier connecteur (3A) inclut des bornes de connexion principales (16) à connecter aux bornes de détection de mise en place/retrait principales (46),
dans lequel les bornes de détection de mise en place/retrait principales (46) et les bornes de connexion principales (16) sont structurées pour être connectées entre elles après que les bornes de sortie (13) et les bornes d'entrée (23) ont été connectées entre elles au moment où le boîtier extérieur (12) est placé dans le corps principal de bâti (2), et
dans lequel un état de mise en place entre le boîtier extérieur (12) et le corps principal de bâti (2) est détecté en détectant un état connecté entre les bornes de détection de mise en place/retrait principales (46) et les bornes de connexion principales (16).

10. Bloc-batterie incluant des connecteurs détachables selon la revendication 7 ou 8,
dans lequel le second connecteur (3B) inclut des bornes de détection de mise en place/retrait principales (46) et des sous-bornes de détection de mise en place/retrait (47) détectant un état connecté du premier connecteur (3A), et le premier connecteur (3A) inclut : des bornes de connexion principales (16) à connecter aux bornes de détection de mise en place/retrait principales (46) ; et des sous-bornes de connexion (17) à connecteur aux sous-bornes de détection de mise en place/retrait (47),
dans lequel les bornes de détection de mise en place/retrait principales (46) et les bornes de connexion principales (16) sont structurées pour être connectées entre elles après que les bornes de sortie (13) et les bornes d'entrée (23) ont été connectées entre elles au moment où le boîtier extérieur (12) est placé dans le corps principal de bâti (2),
dans lequel les sous-bornes de détection de mise en place/retrait (47) et les sous-bornes de connexion (17) sont structurées pour être connectées entre elles avant que les bornes de sortie (13) et les bornes d'entrée (23) ne soient connectées entre elles au moment où le boîtier extérieur (12) est placé dans le corps principal de bâti (2), et
dans lequel un état de mise en place entre le boîtier extérieur (12) et le corps principal de bâti (2) est détecté en détectant un état connecté entre les bornes de détection de mise en place/retrait principales (46) et les bornes de connexion principales (16) et un état connecté entre les sous-bornes de détection de mise en place/retrait (47) et les sous-bornes de connexion (17).
